(19)

Europäisches
Patentamt

European
Patent Office

Office européen
des brevets

(11)     EP 4 442 575 A1

(12)     **EUROPEAN PATENT APPLICATION**

(43) Date of publication:
**09.10.2024 Bulletin 2024/41**

(21) Application number: **23167173.6**

(22) Date of filing: **06.04.2023**

(51) International Patent Classification (IPC):
**B64D 27/24** (2024.01)     **B64D 27/02** (2006.01)

(52) Cooperative Patent Classification (CPC):
**B64D 27/24; B64D 27/026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Elysian Aircraft Company B.V.
3641 SK Mijdrecht (NL)**

(72) Inventors:
- **Wolleswinkel, Robert Eduard
  3054 CK Rotterdam (NL)**
- **De Vries, Reynard
  2611 RJ Delft (NL)**
- **Vos, Roelof
  2235 TA Valkenburg (NL)**

(74) Representative: **Morbidini, Marco et al
Kilburn & Strode LLP
Lacon London
84 Theobalds Road
London WC1X 8NL (GB)**

(54)     **DESIGN PRINCIPLES FOR ELECTRIC AIRCRAFT**

(57)     The present disclosure relates to an aircraft comprising: a fuselage and at least one wing arranged in a tube-and-wing design; a plurality of propulsors; and a primary energy source configured to power the propulsors, the primary energy source comprising rechargeable batteries. The aircraft has a maximum take-off mass 'MTOM' of at least 8,618 kg; and an electric range factor 'ERF' of at least 6.

**Fossil fuel 100 seater turboprop**

Dimensions: fuselage 30m, wingspan 25m
MTOM: 30000 kg
W/S = 500 kg/m2
Aspect ratio ± 12

L/D = ± 15-16

**Battery-electric 100 seater**

Dimensions: fuselage 30m, wingspan 44m
MTOM: 85000 kg
W/S = 500 kg/m2
Aspect ratio ± 12

L/D = ± 22-23

Similar fuselage, similar aspect ratio and similar wing loading give much higher L/D

Figure 4

EP 4 442 575 A1

**Description**

FIELD

The present disclosure relates to design principles for electric aircraft and wings for electric aircraft. The present disclosure also relates to electric aircraft and wings for electric aircraft based on said design principles. The present disclosure also relates to alternative reserve energy sources for electric aircraft. The present disclosure also relates to load-bearing hatches for electric aircraft wings. In particular, the electric aircraft are tube-and-wing design electric aircraft including rechargeable batteries.

BACKGROUND

Aviation accounts for approximately 2-3% of total carbon dioxide emissions. Aviation is expected to grow by 4-5% per annum in next decade. In addition to carbon dioxide, aviation also contributes to climate change through creation of contrails and exhaust of $NO_X$ and water vapor in higher atmospheric levels. The net-zero challenge is twofold: both carbon and non-carbon emissions must be reduced to zero.

Current air traffic patterns clearly indicate which type of aircraft and which stage lengths contribute most to CO2 and related non-CC2 emissions. From ICCT estimates of CO2 emissions from commercial aviation in 2013, 2018, and 2019, it can be estimated that approximately 7% of all civil aviation CO2 emissions stem from flights shorter than 500 km, 19% from flights up to 1000 km and 43% from flights up to 2000 km.

Many publications in recent years have underlined the perceived limitations for battery-electric aircraft.

Ang et al. in Performance analysis of an electrically assisted propulsion system for a short-range civil aircraft J Aerospace Engineering 2019, Vol. 233(4) 1490-1502 conclude that, for aircraft, the limited power-to-weight ratio of electrical components impedes the development of all-electric propulsion. The authors argue that instead of using all-electric propulsion, it is more beneficial to use an electrical system as a secondary system that would be running in parallel and would assist the existing primary propulsion system in certain flight phases to increase the overall efficiency.

Hall et al. in Feasibility of Electrified Propulsion for Ultra-Efficient Commercial Aircraft Final Report, NASA, 2019 conclude that all electric designs are not feasible at any scale (from thin haul to long haul) because the required battery mass is larger than the airframe parameters can support. This paper argues that even with optimistic estimates of battery capacities available in 2035, batteries alone are unlikely to power aircraft at current design missions for thin haul, regional medium haul and long haul aircraft.

Epstein and O'Flarity in Considerations for Reducing Aviation's CO2 with Aircraft Electric Propulsion Journal of Propulsion and Power, May 2019, Volume 35, Number 3, conclude that electric propulsion is not a promising path to significant reduction of aviation's CO2 in the first half of the 21st century. Supporting this conclusion, the authors state that ninety-two percent of aviation's CO2 is produced by single- and twin-aisle aircraft requiring 15,000 to 200,000 kW of shaft power and 150,000 to 2,250,000 kWh of energy at takeoff and that no known battery technology is capable of powering such aircraft at the ranges now flown.

Schafer et al. in Technological, economic, and environmental prospects of all-electric aircraft. Nature Energy, 2018, 4, pp.160-166, predict that electric aircraft with 10-30% battery weight will only be feasible for regional or short haul flights when battery specific energies increase to much greater values than are currently available.

Webber and Job in Realising Zero-Carbon Emission Flight - Primary Energy Source Comparison and Selection, published by the Aerospace Technology Institute September 2021 consider that a purely battery powered aircraft is suitable for only short-range applications and therefore out of scope for FlyZero. In supporting this conclusion, the authors consider that typical empty operating mass is 55% and fuel mass fractions are 20% and that a battery powered aircraft with this energy fraction could manage only a very short range of less than 250 nautical miles (nm). The authors also concluded that the range for battery powered aircraft would only increase to 450 nm at the cost of decreasing the payload mass fraction to zero (thereby ruling out the use of the aircraft to carry any passengers).

H. Werij, M. Wagemaker in The challenge for battery-powered aircraft, published by Bits & Chips, 2022, conclude that purely battery-powered aircraft will play a very small role in lowering the climate impact of aviation. The authors support this conclusion by arguing that the expected design space for battery electric aircraft is one in which the empty operating mass and battery mass are around 60% and 25%, respectively, of the maximum take-off mass, yielding an effective range of only 250 km.

At least two themes emerge from the existing literature. First, the range of existing electric aircraft and existing electric aircraft designs is too low to noticeably impact the emissions of the overall air transport sector. The well-known Breguet range equation shows that range is driven by the energy fraction (ratio of energy mass divided by maximum take-off mass). However, many authors claim that this energy fraction cannot exceed 25-30% for rechargeable batteries, since current well-designed short range fossil fuel aircraft have similar fuel mass fractions. Second, a suitable rechargeable battery for such existing electric aircraft designs will not exist in the near future. Battery energy density is simply too low according to existing electric aircraft design principles.

Therefore, the common opinion in aerospace engineering literature is that battery electric aircraft will play a very small role in realizing net-zero because that the range obtainable using existing design principles for electric aircraft is too low for electric aircraft travel to significantly reduce global aviation emissions.

The integration of rechargeable batteries in electric aircraft is not well studied. Rechargeable batteries can be recharged in situ in the aircraft but they must be replaced after they have reached a maximum number of charging cycles. Designs must therefore allow access for periodic replacement of the rechargeable batteries. However, provision of access may come at the cost of compromising other design aspects.

It is well-known that aircraft are required by aviation authorities to contain fuel reserves, for example for diversion to an alternative airport and meeting the required loiter and contingency reserves. Though rarely used, such fuel reserves add extra mass to the aircraft which must be carried on every flight.

## SUMMARY

The present disclosure seeks to address these and other disadvantages encountered in the prior art by providing an improved aircraft design.

There is provided an aircraft comprising: a fuselage and at least one wing arranged in a tube-and-wing design; a plurality of propulsors; and a primary energy source configured to power the propulsors, the primary energy source comprising rechargeable batteries. The aircraft has: a maximum take-off mass 'MTOM' of at least 8,618 kg; and an electric range factor 'ERF' of at least 6.

Optionally, the aircraft of has an ERF of at least 6.5; at least 7; at least 7.5; at least 8; at least 8.5; or at least 9.

Optionally, the aircraft of has an MTOM of at least 20,000, at least 40,000 at least 60,000 at least 80,000, or at least 100,000 kg.

Optionally, the aircraft has a maximum payload mass 'PLM' of at least 3000, at least 6,000, at least 9,000, at least 12,000, at least 15,000 kg.

Optionally, the aircraft of has a maximum payload mass 'PLM' of at least 5%, at least 10%, at least 15%, at least 20%, or at least 25% of the MTOM.

Optionally, the aircraft of has at least 50%; at least 60%; at least 70%; at least 80%; at least 90%; or at least 95% of the total mass of the rechargeable batteries associated with the wing.

Optionally, the aircraft has a lift-to-drag 'L/D' ratio of at least 15, at least 17, or at least 19.

Optionally, the aircraft of has a lift-to-drag 'L/D' ratio of 15-30, 17-28, or 19-26.

Optionally, the aircraft further comprises a secondary energy source configured to power the propulsors, wherein the secondary energy source has a greater energy density than the primary energy source.

Optionally, the secondary energy source comprises a liquid fuel, a non-fossil liquid fuel, a non-rechargeable battery, a metal-air battery, or an aluminium-air battery.

Optionally, the aircraft of has a wing volume to fuselage volume ratio 'WV/FV' of at least 0.24, at least 0.27, at least 0.30, or at least 0.33.

Optionally, the aircraft has a wing area to fuselage area of at least 0.5, at least 0.7, at least 0.9, at least 1.1, or at least 1.3.

Optionally, the wing is attached to the underside of the fuselage, and/or the wing comprises foldable tips.

There is also provided a wing assembly for a tube-and-wing design aircraft, the wing assembly comprising: a wing structure; and a primary energy source configured to power a plurality of propulsors, the primary energy source comprising rechargeable batteries. The wing structure has a mass of at least 600 kg, and the ratio of the mass of the rechargeable batteries to the mass of the wing structure is at least 4.

Optionally, the wing structure has a mass of at least 1000, at least 2000, at least 3000, or at least 4000 kg.

Optionally, the ratio of the mass of the rechargeable batteries to the mass of the wing structure is at least 4.5, at least 5, at least 5.5, or at least 6.5.

Optionally, the wing structure is configured to be attached to the underside of a fuselage, and/or the wing structure comprises a foldable tip.

Optionally, the wing assembly is for a tube-and-wing design aircraft having: a maximum take-off mass 'MTOM' of at least 8,618 kg; and an electric range factor 'ERF' of at least 6.

Any of the aforementioned wing assemblies can be included in any of the aforementioned aircraft.

Optionally, the plurality of propulsors includes 6, 8, 10, 12 or 14 propulsors.

Optionally, the rechargeable batteries are configured to be recharged in-situ.

There is also provided an aircraft comprising: a fuselage and at least one wing arranged in a tube-and-wing design; a plurality of propulsors; and a primary energy source configured to power the propulsors, the primary energy source comprising rechargeable batteries. The aircraft includes a secondary energy source configured to power the propulsors. The secondary energy source comprises a non-rechargeable battery having an energy density greater than that of the primary energy source.

Optionally, the secondary energy source comprises one of: a metal-air battery, or an aluminium-air battery.

Optionally, aircraft has: a maximum take-off mass 'MTOM' of at least 8,618 kg; and an electric range factor 'ERF' of at least 6.

Optionally, the secondary energy source is configured to operate exclusively as a reserve energy source.

Optionally, the secondary energy source is for diversion to an alternative airport and meeting the required loiter and contingency reserves.

Optionally, the secondary energy source has an effective energy density greater than 400 Wh/kg; greater than 500 Wh/kg; greater than 600 Wh/kg; greater than 700 Wh/kg; or greater than 750 Wh/kg.

There is also provided a wing assembly comprising: a wing structure comprising a load-bearing hatch, and rechargeable batteries, the rechargeable batteries being disposed in the wing structure. The load-bearing hatch is arranged to open and close an opening in the wing structure, and the opening is arranged to allow access to the rechargeable batteries.

Optionally, the load-bearing hatch is configured to bear at least a portion of a load applied to the wing structure, and/or transmit aerodynamic, inertial or gravitational loads exerted on the wing structure.

Optionally, at least part of the rechargeable batteries is coupled to the load-bearing hatch.

## BRIEF DESCRIPTION OF THE DRAWINGS

Specific embodiments are now described, by way of example only, with reference to the drawings, in which:

Figure 1a shows a plot of empty operating mass fraction vs energy mass fraction for rechargeable battery electric aircraft according to embodiments;

Figure 1b shows a plot of empty operating mass vs energy mass fraction for rechargeable battery electric aircraft according to embodiments;

Figure 1c shows a plot of energy consumption vs energy mass fraction for rechargeable battery electric aircraft according to embodiments;

Figure 2a shows a schematic plot illustrating a comparison of design spaces for turboprop fossil fuel aircraft and long range fossil fuel aircraft and electric aircraft according to embodiments;

Figure 2b shows a copy of the schematic plot shown in Figure 2a and an adapted version of the schematic plot for electric aircraft employing further design principles according to the present disclosure;

Figure 3 shows a plot of maximum take-off mass 'MTOM' vs battery mass fraction for rechargeable-battery aircraft according to embodiments;

Figure 4 shows a schematic comparison of the wingspan of an electric plane according to an embodiment compared with similar turboprop plane;

Figure 5 shows a plot of aircraft range obtained for different parametric designs according to embodiments;

Figure 6 shows a plot of aircraft MTOM obtained for different parametric designs according to embodiments;

Figure 7 shows a plot of aircraft energy consumption per passenger-kilometer obtained for different parametric designs (passenger count and ERF) according to embodiments;

Figure 8 shows simplified planform views of a family of electric aircraft with different payloads and electric range factors; and

Figure 9 shows iso-range curves in a plot of battery energy density vs ERF.

## OVERVIEW

In overview, and without limitation, the present disclosure relates to defining a design space for electric aircraft which goes against the conventional thinking and design trends in this field to produce an electric aircraft with a longer range than previously thought possible using rechargeable batteries. This application also relates to a wing for such electric aircraft, load carrying hatches for aircraft wings, and non-rechargeable reserve energy sources for rechargeable battery electric aircraft.

Some of the design principles in the present disclosure seek to maximize the useful battery mass fraction, and therefore range, by minimizing the empty operating mass fraction for a given payload mass requirement. This is achieved by exploiting the design principles, design choices and design features as described herein.

Conventional thinking suggests that electric aircraft designs will be limited to very short range aircraft which may not be suitable for the majority of commercial flight distances. While the range of battery-powered aircraft is indeed shorter than fuel-based aircraft, the design principles presented in this document will show that it is in fact higher than literature and conventional thinking in electric aircraft design suggests, and therefore it can play an important role in realizing net zero.

The solution to increase the range of rechargeable battery aircraft is to increase what the inventors coin *the electric range factor* 'ERF' - the product of the lift-to-drag ratio and the battery mass 'BM' as a fraction of the maximum take-off mass 'MTOM' - while operating in the CS25 design space (i.e. so that the aircraft have an MTOM of at least 8618 kg).

The inventors have recognised that an increase in MTOM coupled with shifting the design space to allow an increase in the battery mass fraction relative to existing electric aircraft designs is a particularly effective means for increasing the electric range factor. The inventors have also devised several means by which the empty operating mass fraction can be reduced. This allows a yet further increase in the battery mass fraction, which in turn increases range. In addition, or alternatively, reducing the empty operating mass fraction allows an increase in the payload mass fraction, thus reducing energy consumption per passenger km.

The inventors have also devised design features which support these general concepts. For example, by associating the battery mass primarily with the wing (for example by placing the rechargeable batteries in, on or under the wing), the wing root bending moment can be reduced. This allows the empty operating mass 'EOM' fraction (EOM/MTOM) to be reduced yet further because the relative mass of the aircraft structure can be reduced due to the reduction in in-flight stress where the wing meets the fuselage. This is just one example of a design improvement that allows a greater payload mass 'PLM' fractions (PLM/MTOM) and/or even greater battery mass fractions (BM/MTOM).

Embodiments employing these design principles, choices and/or features include aircrafts with a relatively large wing area (and volume) and a relatively small fuselage area (and volume), compared to typical CS-23 or short range CS-25 aircraft. This automatically implies a higher lift-to-drag ratio than typical CS-23 or CS-25 aircraft, further enhancing range for a given battery mass fraction.

Other design features or principles described in this disclosure can (further) increase the lift-to-drag ratio of the aircraft and/or allow a reduction in the empty operating mass fraction, this allowing even greater battery mass and or payload mass fraction and further increasing the range of the electric aircraft. For example, increasing the number of propulsors compared with conventional aircraft so that there are more than four propulsors on the wing helps to increase the airflow over the wings, thus increasing lift. In another example, the airframe mass can be reduced by adopting a low-wing construction in which the wing is connected to the underside of the fuselage. In yet another example, the in-flight wingspan and/or the size (e.g. planform area or volume) relationship between the wings and fuselage can be adjusted to increase the lift-to-drag ratio. For particularly large wingspan designs, the wing can include foldable tips to accommodate airport requirements.

Another aspect is directed to secondary energy sources for electric aircraft having rechargeable batteries as a primary energy source. The secondary energy sources are of greater energy density but can be used far less often, if at all, in normal operation of the aircraft due to their intended use as reserves. The aircraft can thus take advantage of secondary energy sources suited to these requirements to make the most efficient use of the mass fraction set aside for energy sources in the aircraft while allowing the aircraft to remain rechargeable by virtue of the primary energy source.

Yet another aspect is directed to load-bearing hatches in a wing structure for access to rechargeable batteries therein. Though rechargeable batteries can be recharged in situ in the wing structure, their useful lifetimes may be only a fraction of the useful lifetime of the wing structure and hence replacement of the batteries is required from time to time. Replacement requires access into the wing structure through an opening. Such openings potentially weaken the wing structure or reduce its ability to carry loads applied to it, for example during flight. Rather than increasing the wing structure mass by reinforcing areas around the opening to transfer applied loads around it, the hatches are configured to carry the load instead. Thus, the wing structure mass does not need to increase to accommodate the openings for access to the rechargeable batteries.

## DETAILED DESCRIPTION

### *Abbreviations*

The following abbreviations are used in this disclosure for conciseness:

BM = Battery Mass
DEP = Distributed Electric Propulsion
EM = Energy Mass (= BM in case of battery electric aircraft)
EOM = Empty Operating Mass
ERF = Electric Range Factor
MTOM = Maximum Take Off Mass
PLM = maximum Payload Mass
PtL = Power to Liquid
RPK = Revenue Passenger Kilometer

SAF = Sustainable Aviation Fuel
eSAF = Sustainable Aviation Fuel produced from electricity
TLAR = Top Level Design Requirements

*Symbols and parameters*

The following symbols and parameters are also used:

$A$ = aspect ratio
$C_D$ = drag coefficient, $D/(q_\infty S) = C_{D0} + C_{Di}$
$C_{D0}$ = zero-lift drag coefficient
$C_{Di}$ = induced drag coefficient
$C_L$ = lift coefficient, $L/(q_\infty S)$
$C_{Lmax}$ = maximum lift coefficient
$D$ = drag force [N]
$D_{fus}$ = fuselage diameter [m]
$e$ = Oswald factor
$e_{bat}$ = battery energy density [J/kg]
$g$ = gravitational constant: 9,8 $m/s^2$
$L/D$ = lift-to-drag ratio
$l_{fus}$ = fuselage length [m]
$q_\infty$ = freestream dynamic pressure, $0.5\rho_\infty V^2$ [Pa]
$R$ = Range [m] or [km]
$R_{fus}$ = fuselage radius [m]
$S$ = wing reference area [m$^2$]
$S_{wing}/S_{fus}$ = wing-area-to-fuselage-area ratio, $2S/(\pi l_{fus} D_{fus})$
$V$ = velocity [m/s]

$\left(\dfrac{BM}{MTOM}\right)$ = battery mass fraction. Total battery mass divided by maximum take-off mass

$\left(\dfrac{PLM}{MTOM}\right)$ = payload fraction. Total maximum payload mass divided by maximum take-off mass

$\left(\dfrac{EOM}{MTOM}\right)$ = empty operating mass fraction. Total empty operating mass divided by maximum take-off mass

$\left(\dfrac{BM}{WM}\right)$ = battery-mass over wing-mass fraction

$\eta_{elec}$ = electric system efficiency. Combined efficiency of batteries, battery management system, cabling, inverters and electric motors
$\eta_p$ = propulsive efficiency. In the case of propellers, defined as propulsive power generated by propellers (thrust times velocity) divided by shaft power supplied to the propellers
$\eta_{btw}$ = Total 'battery-to-wake' efficiency. Product of $\eta_{elec}$ and $\eta_p$
$\rho_\infty$ = freestream air density [kg/m$^3$]

*Definitions*

The following definitions are useful for understanding the disclosure:
**Breguet range:** cruise flight range, as calculated based on the adapted Breguet range equation (see formula section).
**Useful range:** maximum serviceable air range; i.e. maximum distance that a given payload can be transported by the aircraft, from take-off until touchdown, in normal weather conditions without wind, while adhering to the necessary requirements in terms of reserves. This range can be calculated by taking the Breguet range and making several adjustments for a.o. take off, climb, etc., (see calculation assumptions).
**Total range:** useful range *plus* the effective range that the aircraft must be able to cover in the air for reserves. The "reserves" comprise three main components: contingency, diversion and loiter.
**Lift-to-drag ratio:** ratio between the lift force, defined as the component of the aerodynamic force generated on the airframe (excluding propulsors) that is perpendicular to the incoming flow direction, and the drag force, defined as the component that parallel to the incoming flow direction.

For an existing aircraft (i.e. in the real world), this parameter can be measured, whereas in the conceptual design process, it is estimated numerically. For the values and limits established in this disclosure:

◦ For the purposes of measured (or real-world) aircraft, the lift-to-drag ratio can be measured in steady, flight at cruise altitude and cruise speed in ISA (International Standard Atmosphere) conditions, unless specified otherwise.

◦ For the purposes of conceptual design processes, the lift-to-drag ratio can be calculated, for example by assuming a parabolic drag polar, $C_D = C_{D0} + C_{Di} = C_{D0} + C_L^2/(\pi Ae)$ , where:

◦ A is the wing aspect ratio.

◦ $C_L$ is the lift coefficient in the specified flight conditions set out above for measuring lift-to-drag ratios.

◦ The Oswald factor e is calculated using $e = (1.02 + 0.0075\pi A)^{-1} + \Delta e$, where the term in parentheses is based on Aerodynamic Design of Transport Aircraft, E. Obert, 2009, Fig. 40.36, and the term $\Delta e$ is a correction factor accounting for changes in the Oswald factor with respect to conventional aircraft (e.g. for aircraft with a small fuselage relative to a large wing, $\Delta e$ = +0.025 is assumed).

◦ $C_{D0}$ is the zero-lift drag coefficient, calculated using component buildup method of the textbook Aircraft Design: a conceptual approach, 6th edition, Daniel Raymer, 2018, Ch. 12, and including additional drag contributions due to heat exchangers for cooling of the electric system. For reproducibility, Table 1 lists typical values (taken from the Daniel Raymer textbook referenced herein) and the assumed values selected in this study for key parameters of the drag buildup.

*Table 1* - example parameters used to determine the zero-lift drag coefficient

| Parameter | Applicable component | Typical value | Assumed value |
|---|---|---|---|
| Skin roughness k [$\times 10^{-5}$ m] | Aircraft | 0.052 - 1.015 | 0.634 |
| Interference factor, *Q* | Fuselage | 1.00 | 1.00 |
| | Wing | 1.00 | 1.00 |
| | Tail | 1.03 - 1.08 | 1.03 |
| | Motor nacelles | 1.00 - 1.50 | 1.50 |
| | Landing gear nacelles | 1.00 - 1.50 | 1.00 |
| Laminar flow fraction | Fuselage | 5% - 35% | 5% |
| | Wing | 10% - 50% | 15% |
| | Tail | 10% - 50% | 35% |
| | Motor nacelles | - | 10% |
| | Landing gear nacelles | - | 10% |
| Leakage and protuberance drag | Aircraft | 5% - 10% | 15% |

Additionally, zero-lift drag due to fuselage upsweep (following Ch. 12 of the Daniel Raymer textbook referenced herein) and heat exchangers of the thermal management system (assuming 0.1668 N drag per kW of heat rejected) are included. Drag due to external stores, windmilling engines, and trans/supersonic parasite drag are not considered applicable and are therefore neglected.

**Battery mass (BM):** mass of the rechargeable battery pack used for propulsive and non-propulsive purposes, including the energy cells, battery management system, and elements which contribute to the structural integrity (e.g. a frame or other mechanical elements), thermal management (e.g. cooling plates or channels), exchangeability, or safety & reliability of the cells. In other words, the rechargeable battery pack consists of the components that are removed and replaced when the cells reach their end-of-life on the aircraft, plus any components that remain in the aircraft during the process of replacing the cells, but which functionally (i.e. structurally, thermally, etc.) contribute to the integrity and operability of the cells on board the aircraft.

**Battery energy density:** total end-of-life useful energy capacity of the cells in the rechargeable battery pack, divided by the battery mass as defined above.

"Useful" energy refers to the maximum amount of energy that can safely be extracted from the cells during a normal discharge cycle while meeting the specified cycle life, i.e. it accounts for the *maximum depth of discharge.*

"End-of-life" refers to the cell energy capacity before it is replaced on the aircraft, i.e. it accounts for *cell degradation*. Note that the cell may still have secondary applications after its life on the aircraft.

The energy capacity must be quantified at a discharge rate representative of normal operation (e.g. cruise C-rate).

For example, for cells which, when new, provide 100 Wh of energy per kg of cell at a discharge rate of 1C, with a 25% mass overhead for packaging, a maximum depth-of-discharge of 90%, and a chosen end-of-life capacity of 80%, the battery energy density would be (100 · 0.8 · 0.9) Wh / (1 + 0.25) kg = 57.6 Wh/kg.

**Electric range factor:** non-dimensional parameter defined as the product of the lift-to-drag ratio and the battery mass fraction, where the latter is the ratio between the battery mass and the maximum take-off mass of the aircraft.

**Range extender:** a set of powertrain components which is used to increase the total range beyond what is achievable with the rechargeable batteries alone. For example, in the case of a fuel-based gas-turbine solution (a turbogenerator), the "range extender" would comprise the gas turbine and its accessories (oil system, intake, exhaust, etc.), the fuel, the fuel system, the electric generator, and cables and other additional elements of the electrical system required to deliver power to the rechargeable batteries or propulsors. In the case of a non-rechargeable battery, such as a metal-air battery or aluminium-air battery, the range extender would comprise the battery including the energy cells, battery management system, and elements which contribute to the structural integrity (e.g. a frame or other mechanical elements), thermal management (e.g. cooling plates or channels), exchangeability, or safety & reliability of the cells, as well as additional cables or power distribution elements required to transfer power from the non-rechargeable battery to the rechargeable battery or propulsors. Note that the range extender mass, regardless of type of range extender, is considered a part of the EOM.

**Primary energy source:** the rechargeable batteries for powering the propulsors.

**Secondary energy source:** energy source used by the range extender, which is of a different type than rechargeable batteries. For example, non-rechargeable batteries, or Jet A1 fuel. In the case of a non-rechargeable-battery solution, the secondary energy source is the non-rechargeable battery itself. In the case of a fuel-based gas-turbine solution, the range extender includes fuel as the second energy source as well as the other components as described herein.

**Range extender effective energy density:** effective energy capacity of the range extender, divided by the mass of the range extender.

"Effective" energy refers to the useful amount of energy delivered to the shaft of the propulsors. This accounts for both the usable energy density of the secondary energy source, and potential conversion or transmission losses between the secondary energy source and the shaft of the propulsors.

For example: for a gas-turbine-based range extender, containing 500 kg of fuel with a specific energy of 43 MJ/kg, a range-extender mass excluding fuel of 1000 kg, a gas-turbine efficiency of 35%, and a conversion/transmission efficiency from the gas turbine shaft to the propulsor shaft of 90% (accounting for e.g. cable, electric machine, and power electronics losses), the effective energy density would be (500 · 43 · 0.35 · 0.9) MJ / (1000 + 500) kg = 4.52 MJ/kg = 1254 Wh/kg. For a non-rechargeable battery range extender, the range extender effective energy density would be approximately equivalent to the 'battery energy density' defined herein, assuming that the mass of additional power distribution elements required for the non-rechargeable battery is small compared to the mass of the non-rechargeable battery itself.

**Propulsor:** device used to generate thrust; e.g. a propeller or fan.

**Batteries "associated with wing":** batteries which are installed in such a way that they contribute to a reduction in wing root bending moment during steady level flight. For example, batteries installed in the wing box (or in the volume of the wing), or batteries attached to the wing spars, the wing skin, or in pods installed on or under the wing.

**"Rechargeable" battery:** a battery (i.e. an energy storage device containing one or more electrochemical cells) whose energy can be charged again after being discharged by applying external electrical power; optionally, meaning that the battery is rechargeable *in situ* while installed in the aircraft.

**Wing structural mass (WM):** mass of the basic wing structure, including ribs, spar, skin panels, etc., but excluding secondary elements such as high-lift devices, spoilers, speed brakes, or actuator mechanisms. For an existing aircraft this can be measured, while in the conceptual design process it must be estimated. For the values and limits established in this document, the (basic) wing structural mass is defined following Synthesis of Subsonic Aircraft Design, Egbert Torenbeek, 1982, Delft University Press, Appendix C, section C-2.

**Wingspan:** distance from one wing tip to the other wing tip when the wings are positioned for normal flight. *Wing:* a wing has two (typically symmetric) halves; i.e. conventional (monoplane) aircraft have *one* main wing.

**Battery mass/wing mass ratio** (BM/WM): mass of the batteries which are associated with the wing adopting the definitions of 'battery mass' and 'associated with the wing' provided herein, regardless of whether they constitute the primary or secondary energy source, divided by the 'wing structural mass', as defined herein.

**Load-carrying hatch:** hatch that acts as an integral part of the wing structure when closed, transmitting aerodynamic, inertial, gravitational, or other loads from one point in the wing structure to another, and maintaining the desired shape and structural integrity of the wing in flight.

*Formulas*

The following formulas and supporting description provide basis for calculations, estimations, principles and concepts described in the present disclosure.

The range of a battery electric aircraft is defined by equation 1, known as the adapted Breguet equation:

$$R = \eta_{\text{elec}} \eta_{\text{p}} e_{\text{bat}} \frac{1}{g} \left( \frac{L}{D} \right) \left( \frac{BM}{MTOM} \right) \qquad \text{(equation 1a)}$$

Increasing either or both BM/MTOM and LID is desirable for increased range. The other terms of equation 1 are defined herein in the symbols and parameters section and are essentially fixed at a maximum currently achievable value as will be described in the following description. As described herein in the definitions section, the product of the terms BM/MTOM and LID in equation 1a is defined herein as the electric range factor 'ERF' given by equation 1b.

$$ERF = \left( \frac{L}{D} \right) \cdot \left( \frac{BM}{MTOM} \right) \qquad \text{(equation 1b)}$$

Equation 2 defines the energy efficiency of the aircraft in cruise flight:

$$\text{Energy per pax km (MJ/paxkm)} = \frac{1}{\left( PLM/MTOM \right) \eta_{\text{elec}} \eta_{\text{p}} \left( L/D \right)} \qquad \text{(equation 2)}$$

(Note: 1 pax = 1000 Newton)

Increasing PLM/MTOM reduces energy per pax km and therefore increased energy efficiency per passenger.

Another formula is the so-called unity equation:

$$MTOM = PLM + BM + EOM \qquad \text{(equation 3a)}$$

This simply states that total aircraft mass (or MTOM) is the sum of maximum payload, batteries and the empty operating mass (EOM). Note that PLM is the *maximum* payload mass. This unity equation can also be written as a sum of three ratios:

$$\left( \frac{BM}{MTOM} \right) + \left( \frac{PLM}{MTOM} \right) + \left( \frac{EOM}{MTOM} \right) = 1 \qquad \text{(equation 3b)}$$

Some of the design principles described herein aim to maximise BM/MTOM and/or PLM/MTOM, by minimising EOM/MTOM.

*Calculation assumptions*

The adapted Breguet range and energy efficiency formulas (equations 1 and 2) incorporate several parameters that are the focus of the design principles of the present disclosure. However, for calculations presented herein, some values must be assumed for these variables. These assumptions are representative of a "large" commercial transport aircraft. The reason for focusing on this aircraft category is explained in the following description, especially under the headings 'think big' and 'think 1960s'.

$\eta_{\text{elec}}$ = 90%. $\eta_{\text{elec}}$ is the total efficiency from battery discharge to energy delivered to the propeller shaft. It is the multiplication of four efficiencies (together with assumed values for calculation purposes): battery discharge efficiency (97%), cable efficiency (98%), inverter efficiency (98,5%) and electric motor efficiency (96%). The quoted percentage values are high but attainable levels for these components.

$\eta_p$ = 85%. $\eta_p$ is the Propulsive Efficiency; a measure for the efficiency of the propeller in converting the power received from the propeller shaft into thrust and speed in cruise flight. The assumed propeller efficiency of 85% is already realized in current fossil fuel turboprop aircraft. Distributed propulsion and optimized propeller design could further improve this.

$e_{bat}$ = 200 - 400 Wh/kg. There are several factors determining this parameter:

- Energy density of individual cells (total electric energy per kg of battery cell);
- Cell/pack ratio (amount of additional material added to the battery cells for providing structural rigidity, fire protection, etc.);
- Maximum and minimum state of charge (batteries offer notably different performance in terms of voltage, maximum power and internal resistance as function of their state of charge and therefore there are often practical minimum and maximum state of charge limits, also to protect the batteries against degradation); and
- Battery degradation (actual maximum energy density as percentage of maximum energy density with zero cycles).

Since useful battery energy density in 10 years from now is unknown, the principles and calculations in the present disclosure may apply a range of 200-400 Wh/kg.. The lower end of this range represents current technology, whereas the upper end of this range is the aspired technology, e.g. as expressed by the NASA SABERS project. Several publications use much higher energy densities and still conclude that meaningful large scale battery electric aviation is not feasible. Therefore, showing the possibilities for battery electric aircraft with an energy density of 200-400 Wh/kg, proves the validity of the design principles of the present disclosure. However, in embodiments, the rechargeable batteries have an energy-to-mass ratio of at least 240 Wh/kg, preferably at least 360 Wh/kg, more preferably at least 440 Wh/kg. In any case, in embodiments, the rechargeable batteries have an energy capacity sufficient to provide the aircraft with range of at least 500 km; at least 800 km; or at least 1000 km

$L/D$ = 22. Most regional and narrow body aircraft have an LID of 15-16, whereas current larger long-range aircraft approach an LID of 19-20. However, as discussed in the following description, LID values of 20-25 can be assumed for a well-designed electric aircraft. For calculations, an LID of up to 22 has been assumed.

The **Breguet range** (or Breguet cruise range) is calculated with these above-mentioned assumptions. This range is the theoretical maximum range in cruise flight. It assumes that all battery energy available, is used for propulsion and it does not take into account any efficiency losses due to taxi, take off, climb, etc.

The **useful range** is calculated by taking the Breguet range and making the following corrections:

- Climb and descent, during which the operating conditions and efficiencies differ from cruise flight. For example, a propulsive efficiency in climb of 80% instead of 87%.
- Extra energy required for all non-propulsive systems (Thermal Management System, Environmental Control System, Avionics, etc.), estimated to be 6% of propulsive energy required.
- Battery energy required for taxi, take off, and landing, assumed to be 27 MJ per flight per 1000 kg MTOM.
- For the diversion segment of aircraft with a gas-turbine-based range extender, the additional battery energy required for assistance in Go Around and climb to diversion altitude is assumed to be 40 MJ per flight, per 1000 kg MTOM.

The useful range thus expresses the range that can actually be flown from 'gate to gate' in still air. Note: the range calculated for the various parametric designs (e.g. in table 5) is the useful range, calculated as explained above.

Aircraft are required to carry sufficient fuel/energy for both the trip at hand and to cover diversions or other emergency situations. The required fuel (or energy) consists of following elements:

- Taxi energy: amount required for startup and taxi
- Trip energy: amount required for trip from take-off to landing and taxi to stand, calculated based on expected route and altitude
- Contingency energy: amount required to cover for unexpected extra trip fuel usage, e.g. due to head winds, less optimal routes, etc. Often 3-5% of trip fuel
- Alternate energy: fuel required in case of diversion to the alternate airport. This fuel covers the trip from destination to alternate. Exact amount depends on selected alternate airport. In some instances (good weather and multiple runways), there is no requirement for an alternate
- Final reserve energy: amount that covers loiter, a stay overhead the airfield at 1500 ft at minimum required power for 30 minutes (turbine engines)

The proposed design covers the taxi and trip energy through rechargeable batteries. The final reserve (loiter), alternate reserve and contingency reserve are covered through a range extender. The total range can be calculated as the sum of the useful range and the range stemming from the above three energy reserves.

**DESIGN PRINCIPLES FOR MAXIMIZING EFFECTIVE RANGE**

*INTRODUCTION AND DESIGN PRINCIPLES*

The inventors have recognised that the conventional thinking in electric aircraft design envisages a very limited useful range for aircraft with rechargeable batteries. New design principles are proposed in the present disclosure which are contrary to existing trends, intuition and design ideologies for electric aircraft.

The present disclosure includes nine design principles that define a new design space for commercial battery electric aircraft. These nine principles can be used in any combination.

1. *'Think Big'*: use aerodynamic and weight scale advantages.
2. *'Think 1960s'*: use design principles of long-range 1960s aircraft.
3. *'Associate batteries with the wing'*: batteries in wing for weight reduction.
4. *'Low power -to-weight ratio'*: use electric motor characteristics to your advantage.
5. *'Optimal wing loading'*: use DEP and accept longer Take Off and Landing distance and lower cruise altitude.
6. *'A low-wing configuration'*: use a low-wing design to carry loads in various scenarios in the most effective way, reducing wing, fuselage and gear weight.
7. *'Load carrying hatches'*: lightest possible wing construction to secure access to batteries for battery replacement.
8. *'Treat reserves differently'*: Different solutions for required reserves.
9. *'High LID is a free gift'*: normal wing slenderness and large wing vs small fuselage give high L/D.

*'THINK BIG'*

The Breguet range equation is independent of the size of aircraft. This applies both to the smallest radio-controlled aircraft and the Airbus A380. However, there are several scale effects that influence the parameters in the Breguet equation:

1) Several aircraft systems have a certain mass, independent of aircraft size. This implies that the larger the aircraft, the lower the relative mass of these systems as percentage of total mass and the lower the relative contribution of these systems to EOM. This is true, for example, for avionics, cockpit instruments etc. Other systems (e.g. electric systems) also scale less than proportional with aircraft size. In this respect, moving to larger aircraft designs is favourable because the empty weight fraction can be reduced.

2) Aircraft structure (fuselage, wing structure, tail section, landing gear) weight is driven by many factors. There are several factors that scale positively with aircraft size (i.e. with larger aircraft having a reduced empty weight fraction): e.g. the fuselage volume of a 100 seat aircraft is more efficiently used (fuselage volume per passenger) than a 20 seat aircraft. However, there are also factors that scale negatively and raise the empty weight fraction with size, most notably the so-called 'square-cube law' (ref 17). This law states that when an aircraft dimension grows by a factor 2 (twice as long, twice as wide), the areas (wing area, fuselage wetted area) grow by a factor $2^2$ and the volume - and thus the structural weight - with a factor $2^3$. An example of this is the wing weight fraction (wing mass divided by MTOM or WM/MTOM), which increases with wing span if wing loading is kept constant. Generally, the net effect of these two factors is that the empty operating mass fraction is reduced with increasing size. However, there is an approximate 'optimum aircraft size' and in aircraft beyond this size positive scale factors will diminish and negative scale factors will begin to dominate so that the empty operating mass fraction begins to increase again with increasing MTOM. In practice, due to in the influence of other design considerations, it is hard to determine this point exactly, but a good approximation is that the optimum size is approximately 200,000 kg MTOM. There is no technical reason for a maximum MTOM for aircraft according to the present disclosure, however it is not envisaged that aircraft having an MTOM over 300,000 kg would be economically viable. Therefore, a nominal maximum MTOM for the electric aircraft according to the present disclosure are approximately 300,000 kg.

3) Aerodynamic performance, expressed as the lift-drag ratio (L/D), tends to increase when moving from smaller general aviation (up to 19 seats) aircraft to larger commercial aircraft. This is due to the fact that smaller aircraft relative to their size have a larger frontal surface, inefficient fuselage, often non-retractable gears, relatively large tail areas and control surfaces, etc.

There are two sets of airworthiness certification requirements for passenger aircraft. In Europe these are labelled CS-23 and CS-25. In the USA a similar set of regulations exists. CS-23 applies to aircraft with 19 passengers or less, and a maximum weight of 8618 kg. CS-25 applies to larger aircraft. The requirements of CS-25 in many respects are more stringent than those of CS-23.

In order to realize a meaningful range, EOM/MTOM must be as low as feasible and LID needs to be as high as feasible. The inventors have recognised that, considering the above mentioned considerations about scale affecting empty operating mass, empty weight fraction and L/D, the CS-25 design space is much better suited for battery electric aircraft.

Therefore, in embodiments, the MTOM is greater than 8,618 kg. The MTOM may also be greater according to embodiments and improved effects on the range can be seen the higher the MTOM. For example, the MTOM is greater than 20,000 kg, optionally greater than 40,000 kg, optionally greater than 60,000 kg, optionally greater than 80,000 kg, optionally greater than 100,000 kg. The maximum MTOM may be 200,000kg, 250,000kg or 300,000 kg. Thus, the range of MTOM of rechargeable battery electric aircraft according to the present disclosure may be defined by any combination of these upper and lower limits, or any open range defined by the lower limits.

*'THINK 1960s'*

Prior studies on the potential of electric aircraft use modern short-range fossil fuel aircraft as reference aircraft for comparison. Short-range fossil fuel aircraft require relatively little fuel, and therefore have a low energy mass fraction (EM/MTOM), of the order of 15% - 20%. These aircraft typically have an empty operating mass fraction EOM/MTOM around 60%. Such studies subsequently assume that, since batteries are heavy (i.e. battery energy density is low compared with jet fuel energy density), an electric aircraft would at best have a comparable EOM/MTOM. However, this assumption is incorrect, and has led numerous authors to focus on a wrong part of the design space.

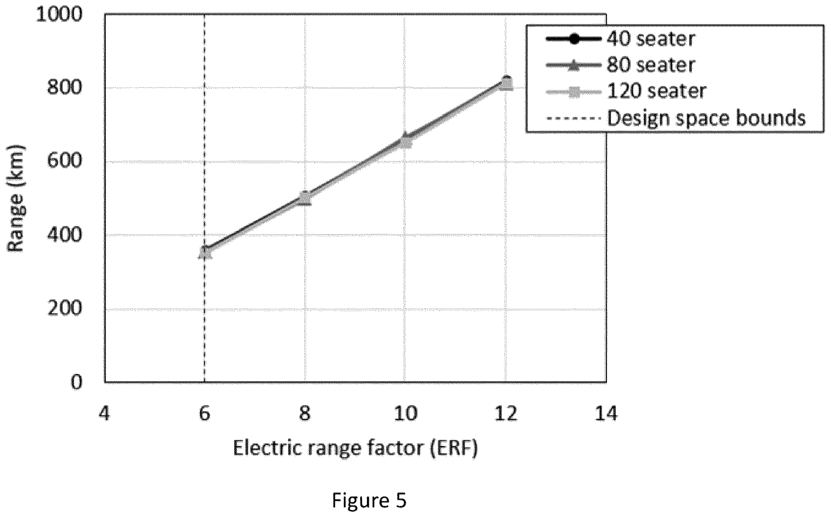

At the dawn of the jet age in the 1960s, several aircraft were developed with much lower empty operating mass fractions and much higher energy fractions than aircraft today. The Boeing 707 and Douglas DC8-63 had EOM/MTOM fractions around 45%. This was driven by the need to cover intercontinental distances, which, combined with the poor thermodynamic efficiency of first-generation jet engines and modest aerodynamics, led to a high fuel consumption. For example, Aerodynamic Design of Transport Aircraft, E. Obert, IOS Press, 2009, shows the EOM/MTOM and EM/MTOM fractions of several aircraft developed in the 1950-1990 timeframe. The author (Obert) concludes that Figure 5 of his book *"shows that for a certain aircraft category, the empty weight fraction is more or less constant and almost independent of aircraft size but is dependent on range. For a long-range aircraft, the empty weight fraction would be 45% and the fuel fraction about 45%, leaving 10% for the payload. Short haul aircraft have a fuel fraction of about 20-25%, empty weight fractions of 50-60% and payload fraction of 25-30%."* Obert uses weight but the reader will understand that "Mass" (kg) and "weight" (N) may be used interchangeably when describing a mass or weight fractions or correlations, since they differ only by a constant factor *g*, a term which cancels in such fractions or correlations.

In Advanced Aircraft Design, Egbert Torenbeek, Whiley Press, 2013, a similar relationship is observed. There, the author (Torenbeek) concludes that *"this suggests that the EOM fraction is more closely related to the fuel fraction than to any other characteristic".* Torenbeek then proposes a formula for Class 1 empty weight estimation for narrowbody aircraft (all units in kg):

$$\mathrm{EOM} \ = \ 1.25 \cdot \mathrm{PLM} \ + \ 0.2 \cdot \mathrm{MTOM} \ + \ 500 \qquad \text{(equation 4)}$$

Combining this equation with the unity equation (equation 3a) and specifying a PLM (e.g. 10.000 kg for a 100 pax aircraft), one can express both EOM and EOM/MTOM as a function of EM/MTOM. In addition, using equation 2, the energy consumption per passenger kilometer as a function of EM/MTOM can be calculated.

Equation 4 is provided or illustrative purposes only and the relationship between EOM, PLM and MTOM in embodiments may or may not follow this relationship.

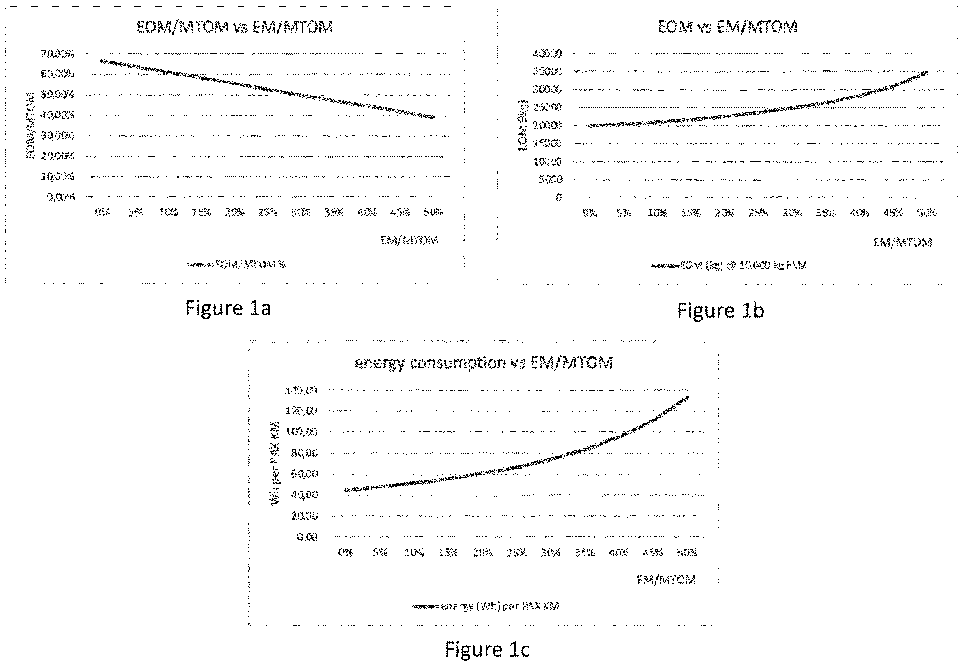

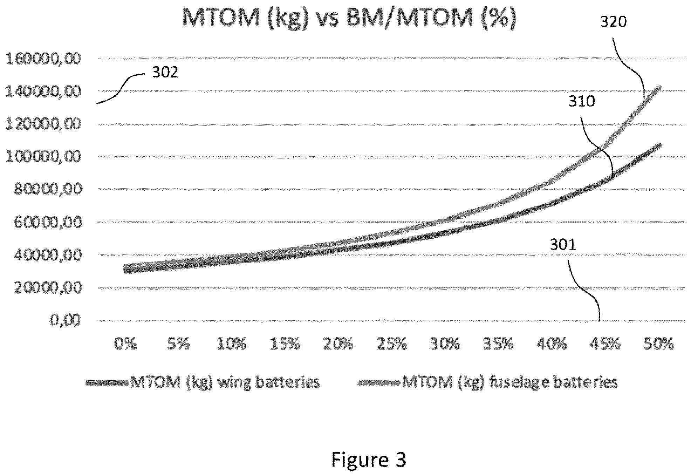

Figures 1a, 1b and 1c, respectively, show a plot of EOM/MTOM, EOM and energy consumption as a function of EM/MTOM (which can also be read as BM/MTOM for battery electric aircraft) calculated using Equation 4. Figures 1a, 1b and 1c and Figure 3, are all indicative and for illustrative purposes only and are not intended to limit the present disclosure. However, for clarity a number of assumptions are listed as follows. The EOM estimate is based on formula from Advanced Aircraft Design, Egbert Torenbeek, Whiley Press, 2013. The EOM (in kg) = 1,25 × PLM + 0,2 × MTOM + 500. PLM is assumed to be 10.000 kg and is indicative of a 100 pax plane.

Figures 1a, 1b and 1c show a clear relationship between three parameters and the energy fraction EM/MTOM:

- A high energy mass fraction (EM/MTOM) correlates with a *low* empty operating mass fraction (EOM/MTOM).
- A high energy mass fraction (EM/MTOM) correlates with a *high* empty operating mass (EOM).
- A high energy mass fraction (EM/MTOM) correlates with *high* energy consumption per pax km.

These correlations are counterintuitive and often poorly understood. Many authors implicitly assume that a low EOM/MTOM implies a low EOM and therefore a more efficient aircraft. However, compared to today's aircraft, the long-range jets and props of the 1960s did not have a lower EOM/MTOM because they had a lower EOM, but because they had a higher MTOM as a consequence of the high energy mass.

A similar effect occurs for electric aircraft: in which case the EM/MTOM fraction is not high due to the long range, nor due to a poor thermodynamic efficiency, but because the energy source itself is not energy dense compared with fossil fuels and therefore very heavy at the energies needed to achieve longer range flights.

In other words, if comparing an electric aircraft and a fossil-fuel based aircraft, both designed for e.g. 1000 km range, the electric aircraft inherently has a higher EM/MTOM, and therefore inherently has a lower EOM/MTOM.

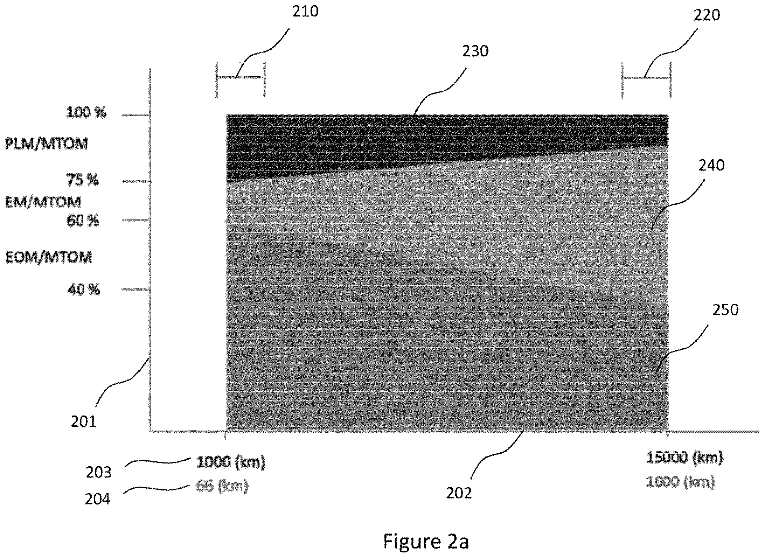

To illustrate this effect, the schematic shown in Figure 2a conceptually depicts how EOM/MTOM, PLM/MTOM and EM/MTOM vary with the range (and how EOM/MTOM, PLM/MTOM scale with EM/MTOM). Figure 2a shows a schematic plot with a vertical axis 201 representing mass as a percentage of MTOM and a horizontal axis 202 simultaneously representing aircraft range in km and EM/MTOM. The horizontal axis shows two scales for the range, a first scale 203 for fossil fuel aircraft and a second scale 204 for rechargeable battery electric aircraft. The plot shows three areas. a first area 230 representing PLM/MTOM, a second area 240 representing BM/MTOM and a third area 250 representing EOM/MTOM. The range values indicated in Figure 2a are notional, indicative of typical values that could be obtained using a Breguet cruise range equation.

As can be seen in Figure 2a, a first design space 210 exists at the lower end of the range (or EM/MTOM) scale on the horizontal axis and a second design space 220 exists at the higher end of the scale. It should be noted that the design spaces are only schematically represented and the scale of the markers representing the limits of the design space does not limit the present disclosure. In relation to fossil fuel powered aircraft, the first design space 210 represents turboprops and the second design space 220 represents long-range fossil fuel jets adopting the 'think big' and/or 'think 1960s' design principles described herein.

As can be seen in the left-hand side of Figure 2a, the first design space 210 is characterised by higher empty operating mass fractions, higher payload mass fractions, and lower energy mass fractions. As shown on the right-hand side of Figure 2a, the second design space 220 is characterised by lower empty operating mass fractions, lower payload mass fractions, and higher energy mass fractions.

Table 2 compares the typical range, MTOM, EOM/MTOM, PLM/MTOM and EM/MTOM of several aircraft to reflect the trends shown in Figure 2a with actual data. The ATR72-600, Q400, DC-8-63 and B707-320B are known fossil fuel aircraft and the F9X represents a design for an electric aircraft having rechargeable batteries according to an embodiment.

Therefore it may be understood that a fossil fuel-based aircraft can be designed for either the first design space 210 of Figure 2a (first range 203 of the order of 500-2,000 km, high payload mass fraction) or the second design space 220 (first range 203 of the order of 5,000-15000 km, low payload mass fraction), depending on the targeted market segment. However, since the range of rechargeable battery electric aircraft is significantly lower than for a fuel-based aircraft, a meaningful mission capability can only be achieved if the range is as high as possible. The inventors have recognised that an electric aircraft designed according to the second design space 220 may achieve commercially meaningful mission capability. While the second design space 220 leads to lower payload-mass fractions than a fossil-fuel-based aircraft designed for the same range, Figure 1c shows that the energy consumption per passenger-km is still competitive due to the substantially higher powertrain efficiency.

*Table 2. – typical ranges, MTOM, and mass fractions for example aircraft*

| | Electric | Modern short-range prop | | 1960s long-range jet | |
|---|---|---|---|---|---|
| Model | F9X | ATR72-600 | Q400 | DC-8-63 | B707-320B |
| Typical range | 800 km | 1500 km | 2040 km | 7400 km | 9300 km |
| MTOM | 76 t | 23 t | 30 t | 161 t | 151 t |
| EOM/MTOM | 42.2% | 59.1% | 58.5% | 44.7% | 44.6% |
| PL/MTOM | 11.8% | 25.7% | 27.0% | 12.9% | 10.1% |
| EM/MTOM | 46.0% | 15.2% | 14.6% | 42.5% | 45.3% |

Note: mass fractions taken as average between max payload mission and max fuel mission

Values in gray (underlined) indicate fractions that differ by less than $\pm 15\%$ from those of the electric aircraft

The inventors have recognised that a correct understanding of these scaling effects results in an apparently simple yet ubiquitously overlooked conclusion: a well-designed electric aircraft lies in a very different part of the design space than a conventional aircraft of a similar range capability. Retrofitting an existing aircraft with batteries, designing a new electric aircraft with the same mass fractions, or even designing a new electric aircraft for the same set of mission requirements as a short-range fuel-based aircraft results in a sub-optimal design.

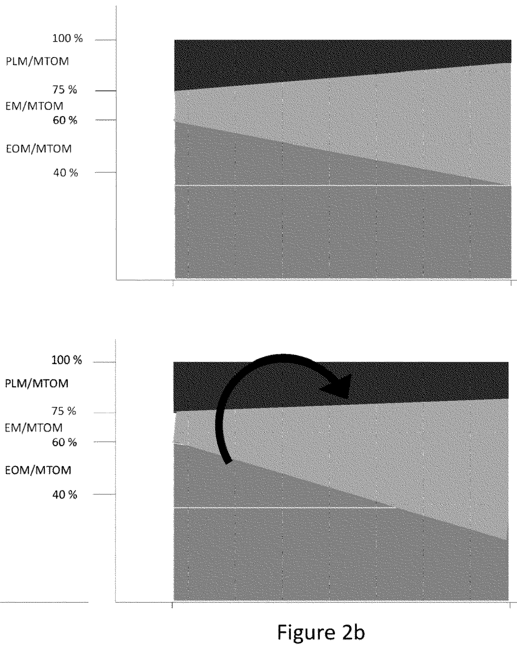

This unique way of viewing the design problem for rechargeable battery electric aircraft results in three choices for designs proposed in the present disclosure. First, the mission requirements (payload, range, take-off distance, etc.) are not a given, but are treated as design variables in the exploratory phase. Second, for that exploratory phase, the mass fractions corresponding to an aircraft with a similar EM/MTOM are used, instead of an aircraft with similar range. And third, EOM/MTOM is selected as an important parameter to minimize when making design choices at vehicle level, since that maximizes PLM/MTOM and EM/MTOM. The design principles and choices described under the headings 'Associate batteries with the wing', 'Low power-to-weight ratio', 'Optimal wing loading', 'A low-wing configuration' and 'Load carrying hatches' in the present disclosure focus on this EOM/MTOM reduction. As shown in Figure 2b, these design principles 'tilt the energy wedge downward'. Figure 2b shows a replica of Figure 2a for comparison and beneath it the same plot-type shown for rechargeable battery electric aircraft employing one or more the aforementioned principles which allow lowering the of EOM/MTOM.

If EOM/MTOM is reduced and BM/MTOM (as now we are describing battery electric aircraft in particular) maintains the values in the plot shown in Figure 2a, PLM/MTOM is allowed to increase in proportion to the decrease in EOM/MTOM. Alternatively, BM/MTOM and PLM/MTOM can both be increased according to the desired purpose of the aircraft (balancing the PLM and range requirements, for example).

In summary, in terms of mass fractions, a well-designed electric aircraft should have more in common with a long-range fossil fuel aircraft from the 1960s than with a modern short-range propeller plane. That is, for rechargeable battery electric aircraft according to the present disclosure, the battery mass may be at least 30%, at least 35%, at least 40%, at least 45%, at least 50%, or even at least 55% of MTOM. The empty operating mass may be less than or equal to 55%, less than or equal to 50%, less than or equal to 45%, less than or equal to 40% or even less than or equal to 35% of MTOM. The payload mass may be at least 5%, at least 10%, at least 15%, at least 20% or even at least 25% of MTOM. Embodiments include any of the rechargeable battery electric aircraft defined herein having combinations of the abovementioned limits of BM/MTOM, EOM/MTOM and PLM/MTOM (adding up to 100% as per the unity equation).

Even if the skilled person was to realise that the empty operating mass is to be lowered or limited for increased range, there are no existing rechargeable electric aircraft that realise this because the battery mass fraction and lift to drag ratios are not sufficient to meet the electric range factors defined in the present disclosure.

Another characteristic of 1960s long range aircraft (or of aircraft designed according to the second design space 220 of Figure 2a) is that the fuselage is small compared with the wing size. In contrast, with electric aircraft designed using turboprop fossil fuel aircraft as a reference, the fuselage is larger compared with wing size. This is described further under the heading 'High LID is a free gift'.

*"ASSOCIATE BATTERIES WITH THE VIIING'*

The relationship between EOM, PLM and MTOM shown in Figures 2a and 2b hold true for conventional fossil fuel 'tube and wing' aircraft, that carry passengers and cargo in the fuselage and fuel/energy in the wing.

The position of fuel or batteries in the aircraft has a significant impact on the empty operating mass. Batteries do not lose their mass during flight, and while this is often considered a disadvantage, in many cases this can also be utilized to reduce the structural weight. The wing structure mass is driven predominantly by the wing bending moment at the wing root (wing/fuselage intersection). The fuselage structural mass is driven by fuselage size and weight carried in the fuselage.

The inventors have recognised that if the batteries are carried in the fuselage instead of in the wing, the following effects occur:

- Wing structural mass increases due to increase in wing root bending moment during level flight, since there is no battery weight to counteract the lift force on the wing.
- Fuselage structural mass increases due to increased weight that the fuselage must carry (and possibly increase in drag as most likely the fuselage volume must be increased to carry the batteries)
- A 'snowball effect' arises: as wing and fuselage weights increase, more energy is required to fly the same distance, which requires more batteries, which further increase wing and fuselage masses, and so on. This snowball effect is especially pronounced at high energy mass fractions.

Therefore, a design principle of the present disclosure is to associate the batteries with the wing in accordance with the corresponding definition provided herein. For example, the batteries can be loaded in the wing volume (in the wing box), or be housed on or under the wing. This contributes to a reduction in the wing-root bending moment because the mass of the batteries counteracts the contribution to the wing root bending moment from the lift in steady level flight. That is, the wing root bending moment in a first direction caused by lift is partially or wholly cancelled out by the wing root bending moment caused by the weight of the batteries associated with the wing or vice versa.

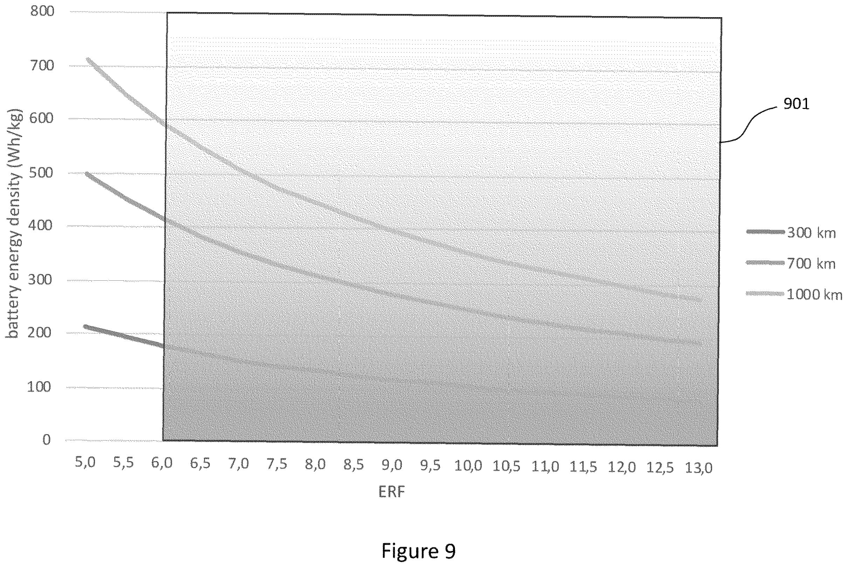

Distribution of the batteries along the wing in the spanwise direction contributes to maximize these benefits. This principle is well-known from 1950-1960ies studies for so-called span loaders: but this was applied to flying wings with all *payload* in the wing (see, for example, Figure 9 of NASA/USRA Advanced Design Program Aeronautics Division. Final Report 1988-89. Design of a Spanloader Cargo Aircraft). These aircraft concepts, although never built, showed that empty operating mass fractions of around 30% are feasible. According to the present disclosure, it is not payload but rechargeable batteries that will be associated with the wing, in such a way as to reduce the wing root bending moment.

That is, even greater reduction in the wing root bending moment during normal flight can be achieved by adopting span loading principles for the rechargeable batteries. That is, the rechargeable batteries associated with the wing can be distributed across a spanwise direction in such a manner as to reduce the wing-root banding moment during normal flight. As will be understood by the skilled reader, except where described as particularly advantageous in the present disclosure, specific examples of this principle are a matter of design implementation based on the aircraft design. The inventors' contribution is to adopt these span loading principle specifically for the rechargeable batteries used to power the propulsors. Span loading principles may alternatively or in addition be adopted for the rechargeable batteries so as to reduce bending moments within the wing itself at locations other than at the wing-fuselage intersection.

Figure 3 shows the magnitude of these effects by expressing MTOM as function BM/MTOM. Figure 3 shows a plot having a horizontal axis 301 representing BM/MTOM as a percentage and a vertical axis 302 representing MTOM in kg. Figure 3 shows a first plotted line 310 and a second plotted line 320 representing calculations for aircraft in which batteries are associated with the wing and fuselage, respectively. The calculations assume the weight of the wing and fuselage can be estimated using established semi-empirical methods (e.g. from Synthesis of Subsonic Aircraft Design, Egbert Torenbeek, 1982, Delft University Press), which is sufficient for a first indication of the trends.

Figure 3 shows that the effect of associating the batteries with the wing on battery electric aircraft weight is most pronounced at high battery mass fractions. For a given PLM (10,000 kg in this case), at 45% battery mass fraction, MTOM increases by approximately 25% if batteries are placed in the fuselage instead of associated with the wing. This is due to the increase in structural mass needed to strengthen the aircraft to accommodate the higher wing root bending moment in steady level flight created by placing batteries in the fuselage. This directly translates into an increase in energy consumption and reduction in energy efficiency per passenger km.

*'LOW POWER- TO-WEIGHT RATIO'*

The power-to-aircraft-weight ratio is the ratio between maximum continuous engine shaft power and maximum take-off weight (i.e., MTOM $\times$ g). The maximum continuous power is measured at sea level at standard atmospheric conditions.

Electric motors (or electric engines) differ in three main ways from turbine engines:

1. Electric motors experience no 'power lapse': where turbine engines lose power when the air density decreases at higher altitudes and/or higher than standard atmospheric temperatures, electric engines are immune to this effect.

2. Electric motors have significant ability to deliver extra power above maximum continuous power. Where turbine engines have been designed often in such a way that limits their peak power to ± 5-10% above maximum continuous power, this limitation is less restrictive for electric engines. In higher power regions, electric engines will become less efficient and more heat must be dissipated. This affects the size the thermal management system but offers ample opportunity for significantly higher non-continuous power levels for abnormal procedures e.g. for steep climb, go-around or wind shear maneuvers.

3. Electric motors provide a roughly constant ratio of maximum continuous power to engine weight, regardless of motor size. So 10 small motors have more or less the same weight as 2 large motors. This allows 'Distributed Electric Propulsion'; many engines across the wing in a spanwise direction and this may be adopted in aircraft according to the present disclosure.

Table 3 shows the maximum power differences between electric and turbine engines in index numbers for different density altitudes.

*Table 3 - maximum power comparison of turbine engines and electric motors*

|  | Max continuous power | | Max power (5 minutes) | |
| --- | --- | --- | --- | --- |
|  | Turbine engine | Electric motor | Turbine engine | Electric motor |
| Sea level ISA | 100 | 100 | 110 | 125 |
| 'hot and high' (density altitude 1829 m) | 85 | 100 | 95 | 125 |
| FL 300 (flight at 30,000 ft or 9144 m) | 45 | 100 | 50 | 125 |

Power-to-aircraft-weight ratio is an important aircraft design parameter because it determines the powertrain weight fraction, and therefore also the EOM/MTOM, of the aircraft. The minimum allowable power-to-aircraft-weight ratio is determined by the flight performance requirements. The designer can choose the power-to-aircraft-weight ratio as long as the requirements are met (similar to the wing loading, discussed in the next section). For gas-turbine aircraft, the minimum allowable power-to-aircraft-weight ratio is typically limited by one of the three following performance requirements:

- Take-Off field length in different ambient circumstances. This is less restrictive for electric motors because they have a higher ratio of max instantaneous power to max continuous power, and are less sensitive to ambient conditions.
- One Engine Inoperative (OEI) minimum climb requirements. This is also less restrictive because multiple electric motors can be used without compromising efficiency or motor weight. This means that if, for example, one out of ten electric motors fails, the remaining 9 motors only have to produce 11% extra power to maintain the same total power. In contrast, if one out of two gas turbine fails on a conventional aircraft, the other turbine must be able to produce 100% extra power to maintain the same total power.
- All Engines Operative (AEO) top-of-climb requirements. This requirement is also relieved for electric motors as they do not present a "power lapse" with altitude.

For these reasons, for a battery electric aircraft, a power-to-aircraft-weight ratio of less than 50% compared to turboprop aircraft is easily feasible. That is, aircraft according to the present disclosure may have a power-to-weight ratio of no more than 0.2, no more than 0.18, no more than 0.16, or even no more than 0.14 kW/kg. In this case, the weight is MTOM and power is maximum continuous power while in flight.

*'OPTIMUM WING LOADING'*

The inventors have recognised that yet further improvements in rechargeable battery electric aircraft can be achieved by associating above a certain proportion of the rechargeable batteries with the wing. For example, aircraft according to the present disclosure may have at least 50%; at least 60%; at least 70%; at least 80%; at least 90%; or at least 95% of the total mass of the rechargeable batteries associated with the wing. This principle may be adopted with or without the span loading principles described herein.

Wing loading is the ratio of maximum take-off mass to the wing area. For commercial transport aircraft, the maximum allowable wing loading (i.e., the smallest possible wing size) is determined by a combination of two parameters in the approach/landing condition: the maximum lift coefficient (CLmax), and the approach speed, which is linked to the landing distance. Typical wing-loading values as provided in Aircraft Design: a conceptual approach, 6th edition, Daniel Raymer, 2018, are approximately 200-400 kg/m2 for turboprops and up to approximately 600-700 kg/m2 for large jets.

It is commonly assumed that wing loading should be as high as possible, since it implies that the wing size is as small as possible. For a given wing aspect ratio ("slenderness"), a small wingspan is lighter. For a given wingspan, a small wing is more aerodynamically efficient. Because of this, large aircraft often use complex high-lift devices to enhance Clmax, and thereby enhance the maximum wing loading. Electric aircraft can further enhance this Clmax by using distributed propellers (propulsors) to "blow" additional air over the wing and increase the effective lift.

However, the inventors have recognised that for electric aircraft designed for commercial passenger transport, a very high wing loading is *not* beneficial. There are two reasons for this. First, a high wing loading requires more power from the engines to take off (in other words, it increases the required power-to-aircraft-weight ratio). While for gas-turbine aircraft the benefits of high wing loading outweigh the drawbacks of a high power-to- aircraft-weight ratio, for electric aircraft, which have heavy powertrains, the opposite occurs: it is more beneficial to have a small motor, even if this implies having a large wing. And second, a large wing provides more volume to house the batteries, further enabling the application of 'associate batteries with the wing' as described herein.

An understanding of this design principle results in the following design *choice*: compared to conventional jet aircraft operating from the same airfields with similar MTOM, a relatively lower wing loading is selected for the electric aircraft. Compared to turbo-prop aircraft, with much lower take-off and landing distance requirements, a much higher wing loading is selected. This results in wing-loading values of the order of $\pm$400-600 or 450-550 kg/m2 and, as a result, less complex high-lift devices are required.

## 'LOW-WING CONFIGURATION'

It may be understood that the aircraft described herein adopt a fuselage and wing in a 'tube-and-wing' design. In this case, the wing can be joined to the fuselage in three ways;

- the wing can be attached to underside of the fuselage: known as a low-wing configuration
- the wing can be attached to upper side of the fuselage: known as a high-wing configuration
- the wing and fuselage can be joined through the middle of the fuselage: known as a mid-wing configuration

For passenger aircraft, a mid-wing configuration is very challenging, as the airframe structural weight increases if the spars of the wing are not continuous at the junction. A continuous spar is also challenging because it would have to cross the cabin halfway along the fuselage. This configuration therefore is not used for large (>19 pax) passenger aircraft.

For traditional fossil fuel aircraft, a high-wing or low-wing configuration have each their own pros and cons and therefore both are used. The low-wing design in general offers a weight advantage over a high wing design. This weight advantage is caused by the fact that the undercarriage length is relatively short and can be stowed in the wing. A high wing design either requires a large undercarriage (e.g. Fokker F27 and Fokker 50) or an undercarriage joined to the fuselage (e.g. ATR 72) and a strong (and heavy) construction between wing, fuselage and undercarriage to carry all loads, especially in taxiing and landing.

Still, the high wing design is often used for propeller aircraft. In this case, the high wing design allows a larger propeller diameter while maintaining the required ground clearance. Therefore, for *turboprop* aircraft to maximum 90 pax, the high wing configuration is the dominant design.

Existing studies and designs for electric or hybrid electric aircraft usually take existing turboprops as reference aircraft and therefore often propose a high-wing configuration. However, as will be explained, this approach is not conducive to producing rechargeable battery electric aircraft with longer ranges.

The inventors recognised the significance of the following four key differences between a traditional fossil fuel aircraft and a battery-electric aircraft:

- For electric aircraft, the landing weight equals the take-off weight, meaning the structural loads upon landing are higher and a heavier landing gear is often required.
- For electric aircraft, the energy mass fraction is much higher, which implies that batteries associated with the wing' will lead to increased structural loads during landing.
- For electric aircraft designed according to the present disclosure (e.g. employing the 'think big' and 'think 1960's' design principles) the fuselage is small compared with the wing size, meaning the landing gear cannot be easily installed on the fuselage. In contrast, with electric aircraft designed using turboprop fossil fuel aircraft as a reference, the fuselage is larger compared with wing size.
- For electric aircraft distributed propellers can achieve the same total disk area with smaller diameters, reducing the need for ground-clearance issues.

In arriving at a low-wing design, the inventors also recognised the significance of the following factors.

- For fuselage-mounted landing gear, the fuselage frame must be heavily reinforced to transmit loads from the wing to the landing gear on touchdown. This leads to increased airframe structural weight and is especially critical if batteries are placed in the wing.
- For fuselage-mounted landing gear, the track width between wheels is small relative to the span of the wing, and thus large fairings or extension mechanisms are required to place the wheels further outboard and avoid lateral tip-over.
- Therefore, in aircraft according the present disclosure, wing-mounted landing gear is preferable over fuselage-mounted landing gear to reduce the EOM/MTOM fraction.
- For wing-mounted landing gear, the landing gear for low-wing aircraft can be shorter and lighter than for high-wing aircraft due to the clearance between the underside of the wing and the ground.
- Therefore, a low-wing design is preferable to reduce the empty operating mass of the electric aircraft and therefore EOM/MTOM.
- Furthermore, for high-wings if batteries are placed in the wing to enable "associate batteries with the wing" effects, the center of gravity of the aircraft is raised compared with low-wing designs, requiring large horizontal-tail moments to rotate the aircraft during take-off.
- Therefore, the design principle of "low-wing configuration" can also build upon the design principle of "associate batteries with the wing" to provide a synergistic effect.

*'LOAD-CARRYING HATCHES'*

Rechargeable batteries degrade and must be replaced at certain intervals. One can expect typical replacement intervals of 6 to 24 months, depending on how the aircraft is used. The replacement procedure requires access to the batteries, which are placed, for example, in the wing box. Battery replacement can be considered a standard procedure but is not regularly required during line maintenance of the aircraft. Moreover, it can also be planned well in advance. Therefore, it is allowable for the replacement procedure to take substantial time (e.g. 12-24 hours), and it may be done in a dedicated environment with dedicated tooling (e.g. in a hangar).

This means that load-carrying hatches, which contribute to the wing structural strength but require a more complex installation/removal procedure, can be used to cover the openings used to access the rechargeable batteries when they need to be replaced or maintained. Despite the potentially longer installation/removal times, the load-carrying hatches distinguish themselves from other structural elements of the wing because they can be opened and closed multiple times as a part of a standard operating procedure. In this process of opening and closing, they do not have to be broken, dismantled or replaced by new hatches. It may therefore be understood that the load carrying hatches are arranged to undergo a cycle of removal and reattachment as part of a standard operating procedure.

Current fossil fuel aircraft also require access to the wing box for inspections or repairs; for example, to inspect the inside of the fuel tank. This is done by means of "access panels", which need to be opened regularly, in short time frames, and with simple tooling. Therefore, these panels cannot be constructed as a critical part of the wing structure, but instead all loads and stresses in the wing must be redirected around the opening. This requires a heavy aircraft structure because extra structural reinforcement needs to be applied around the access panels to carry applied loads around them.

According to the present disclosure, for battery replacement, a load-carrying hatch can be used to open and close the openings instead, where the removable panel is attached to the wing structure in a way that allows the panel itself to carry the loads. This allows a lighter overall construction because there is no need for a reinforced structure to be provided around the openings.

Therefore, aircraft according to the present disclosure can include a wing assembly including a wing structure comprising a load-bearing hatch, and rechargeable batteries disposed in (e.g. the internal volume of) the wing structure. The load-bearing hatch is arranged to open and close an opening in the wing structure, and the opening is arranged to allow access to the rechargeable batteries.

In embodiments, the load-bearing hatch is configured to bear at least a portion of a load applied to the wing structure, and/or transmit aerodynamic, inertial or gravitational loads exerted on the wing structure. At least part of the rechargeable batteries may be coupled to the load-bearing hatch so that the part of the batteries is supported by the load carrying hatch during flight and/or can be removed from the wing structure along with the load bearing hatch during maintenance.

It is to be understood that the present disclosure also relates to a wing assembly with a load bearing hatch whether or not the wing assembly carries rechargeable batteries and whether or not the wing is for an aircraft designed according to the other design principles defined in this disclosure. The meaning of load bearing hatch is defined under the definitions section of the present disclosure.

*'TREA T RESER VES DIFFERENTLY'*

The Breguet range equation also features battery energy density as an input. The 'effective' energy density can be changed by using different energy sources or types of energy. Normally this would not make sense: the battery with highest energy density would always give the highest range, so any mix of battery types would only reduce range.

However, the effective range of an aircraft is the Breguet range minus the required range for flying to an alternate plus a so called 'final reserve range'. In total, these would increase the required range with $\pm$ 300-450 kilometer. This implies that a battery electric aircraft always carries energy for 450 km, which it only uses in abnormal or emergency situations. Therefore, in the present disclosure, it is proposed to use this energy in a form, as light as possible, even if it is very costly and/or cannot be recharged, since it is hardly ever used.

Assuming a future battery energy density of 400 Wh/kg and energy consumption of approximately 130Wh/pax/km, the battery weight for the required reserves for a 100-seater is approximately 15.000 kg. Assuming a SAF fuel range extender of 15 MW with specific power of 5 kW/kg and 40% efficiency, the range extender weight would be 3500 kg and required reserve fuel 1000 kg. The 'effective energy density' of this SAF range extender plus fuel therefore is $\pm$ 1100 Wh/kg. This effective energy density of a SAF range extender could equal the energy density of future Aluminum-Oxide (Al-air) non-rechargeable batteries or other metal-air batteries. These could be used as alternatives range extenders to further simplify the energy system and improve reliability.

Therefore, for rechargeable battery electric aircraft, two possibilities exist for carrying the energy for the required reserves: application of a regular fossil fuel range extender, used for alternate and final reserves and/or application of Aluminum-O2 (Aluminium-air), or other metal-air non-rechargeable batteries as alternative for range extender. In both cases, the effective energy density of the electric aircraft increases and a useful range of approximately 800-1000 km becomes feasible.

Therefore, according to the present disclosure, there is provided an aircraft comprising: a fuselage and at least one wing arranged in a tube-and-wing design; a plurality of propulsors; and a primary energy source configured to power the propulsors, the primary energy source comprising rechargeable batteries. The aircraft also comprises a secondary energy source configured to power the propulsors, the secondary energy source comprising a non-rechargeable battery having an energy density greater than that of the primary energy source.

The secondary energy source may have an effective energy density greater than 400 Wh/kg; greater than 500 Wh/kg; greater than 600 Wh/kg; greater than 700 Wh/kg; or greater than 750 Wh/kg. The secondary energy source is a fossil fuel, an SAF, an eSAF, or a non-rechargeable battery, for example a metal-air battery, or an aluminium-air battery.

The secondary energy source may be configured to operate exclusively as a reserve energy source, optionally for diversion to an alternative airport and meeting the required loiter and contingency reserves.

The secondary energy source may be used only for reserves, and not to enhance the useful range. However, the present disclosure is not limited thereto.

This aircraft may be designed according to one or more of the other design principles described in the present disclosure. However, the aircraft including the above-described secondary energy source is not limited thereto.

*'HIGH L/D IS A FREE GIFT'*

Another significantly influential parameter in the Breguet range equation is the lift-to-drag ratio; L/D. This parameter expresses the amount of drag that the aircraft experiences while generating the required lift. Since the lift equals its weight in cruise flight and engine thrust equals drag, the LID ratio and MTOM determine the required thrust the engines should deliver in cruise flight.

Many factors determine the LID ratio, however, for a regular 'tube and wing' aircraft two factors drive L/D:

- Aspect Ratio: ratio of wingspan squared divided by wing area. The larger this ratio, the lower the induced drag coefficient $C_{Di}$, and thus the higher the L/D.
- Ratio of 'wetted area' (total area 'touched' by the air) vs wing area: the smaller the wetted area ratio, the lower the zero-lift drag coefficient $C_{D0}$, and thus higher the L/D.

Many aerodynamic improvements have been considered in last 50 years to further enhance L/D. Examples are laminar flow profiles, tip propulsors, boundary layer ingestion, box wings, etc. However, attempts to apply such technologies to commercial transport aircraft usually results in modest or zero overall gains due to other implications for the aircraft's design.

Battery-electric aircraft have an aerodynamic advantage which is inherent their scaling effects (for example, those described herein with respect to engine motor size) and does not require additional complex technologies. Due to the low payload-mass fraction achievable with the other design principles described herein (for example 'think big' and 'think 1960s'), battery electric aircraft with a conventional tube-and-wing configuration by definition have a relatively small fuselage and large wing.

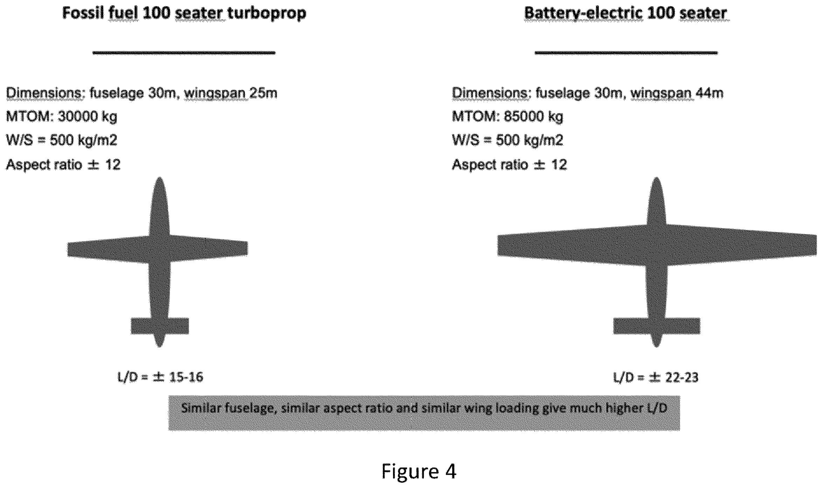

Figure 4 compares a 100-seat battery electric aircraft with 100-seat fossil fuel turboprop aircraft with equal wing loading (W/S) and equal wing slenderness (Aspect ratio; wingspan squared divided by wing area). The battery electric aircraft will have a much higher LID relative to the fossil fuel aircraft, due to the relatively lower ratio of wetted area vs wing area. Thanks to this scaling effect, the increased wingspan causes the LID to rise above 20, to 22-23. Aircraft according to the present disclosure may have a wingspan in flight (or maximum wingspan) of at least 24 meters, at least 30 meters, at least 36 meters, or even at least 42 meters. To accommodate airport requirements, the wing may include foldable tips.

To put these geometrical scaling effects into perspective, Table 4 compares the relative sizes of the wing and fuselage for the same aircraft presented in Table 2. The table below compares the main characteristics of the wing and fuselage in one dimension (wing span/fuselage diameter or wing span/fuselage length), two dimensions (wing area/fuselage area), and three dimensions (wing volume/fuselage volume). For the area ratio, the fraction $(2S)/(\pi D_{fus} l_{fus})$ is employed, where the nominator is approximately equal to the wetted area of the wing (twice the planform area), and the denominator is approximately equal to the wetted area of the cylindrical fuselage $(2\pi R_{fus} \cdot l_{fus})$.

Table 4 shows that higher aspect ratios are employed for the electric and shot-range propeller aircraft, than for the 1960s jets. This leads to a lower induced drag coefficient, $C_{Di}$. On the other hand, the ratio wing area/fuselage area is higher for the electric and long-range jet aircraft, than for the modern turboprops. This leads to a lower zero-lift drag coefficient, $C_{D0}$.

Aircraft according to the present disclosure may therefore have a wing aspect ratio of greater than 8, greater than 9.5, or greater than 11 and/or may have a wing area to fuselage area ratio of greater than 0.7, greater than 0.8, or even greater than 0.9. In more general terms the mathematical product of the wing aspect ratio and wing-area-to-fuselage-area ratio of aircraft according to the present disclosure may be greater than 6, greater than 8, or greater than 10.

These aspects illustrate how an electric aircraft inherently has a lower drag coefficient ($C_D = C_{D0} + C_{Di}$), and therefore a higher lift-to-drag ratio, than typical fuel-based aircraft. Note that, compared to the electric aircraft, the long-range jets have a smaller wing span relative to the fuselage diameter or length, but a comparable volume ratio. This is because the jet aircraft have a lower aspect ratio (span/chord) and taper ratio (tip chord/root chord) than the electric aircraft, leading to a large wing volume near the wing root. Aircraft of the present disclosure may therefore have a wing volume to fuselage volume ratio of least 0.24, at least 0.27, at least 0.30, or at least 0.33.

Table 4 – comparison of ranges, MTOM and aircraft dimensions of rechargeable battery electric, modern turboprop and 1960s long-range jet aircraft.

| | Electric | Modern short-range prop | | 1960s long-range jet | |
|---|---|---|---|---|---|
| Model | F9X | ATR72-600 | Q400 | DC-8-63 | B707-320B |
| Typical range | 800 km | 1500 km | 2040 km | 7400 km | 9300 km |
| MTOM | 76 t | 23 t | 30 t | 161 t | 151 t |
| Wing aspect ratio, $A$ | 12.0 | 12.0 | 12.6 | 7.6 | 7.0 |
| Wing span/fus. diameter | 14.1 | 9.5 | 10.5 | 11.5 | 11.0 |
| Wing span/fus. length | 1.25 | 1.00 | 0.91 | 0.81 | 1.00 |
| Wing area/fus. area | 0.93 | 0.50 | 0.49 | 0.78 | 1.01 |
| Wing volume/fus. volume | 0.35 | 0.11 | 0.13 | 0.32 | 0.38 |

In Table 4, the aircraft dimensions of short-range props and long-range jets is estimated based on publicly available data and sketches. The F9X electric model is an embodiment according to the present disclosure.

In Table 4, underlined values highlighted in gray indicate values that differ by less than about 15% from the electric aircraft.

DETAILED DESCRIPTION OF EXAMPLE DESIGNS AND EMBODIMENTS

Aircraft design often follows several steps. Starting from an initial specification, the aircraft designer develops an initial concept and verifies with a relatively simple set of calculations whether this concept is 'within the ballpark' of the top-level aircraft requirements (TLAR). The formulas and calculations that govern this conceptual verification are often labelled as 'Class 1' estimates. These 'Class 1' estimates are top-down (e.g. simple estimates of total aircraft mass, based on few parameters like payload mass and range, required power estimates, wing size estimates, etc.) and based on past experience.

As the design is further detailed towards a preliminary design, the designer can verify whether the design meets the specification through bottom-up 'Class 2' estimates. These are weight estimates per aircraft component, based on formulas that have been derived from statistical correlations between certain parameters and the total weight of these components in existing designs. A similar approach is available for drag estimates and related performance estimates.

Only at the end of the detailed design process, a full weight and performance validation can be made. E.g. only when the wing is designed in full detail, the exact weight can be determined. However, there are some intermediate verification methods available for weight or drag estimation that combine both statistical models and physics-based models. These methods are often labelled 'Class 2.5' estimates.

As per the principles set out in this disclosure, battery-electric aircraft designs exist in a new 'design space'. This by definition limits the usage of statistical approaches typically used in Class 2 design calculations. For critical elements like batteries, motors, cooling systems, etc. there is no prior experience. For other aircraft components and aircraft structures, existing Class 2 and higher estimates can be used, however, we must be mindful that these represent the 'fossil fuel'-past and sometimes this hinders the applicability of these estimates.

Therefore, in this disclosure, the evidence provided to prove the usefulness of the different design concepts is often based on 'Class 1' estimates. In some instances, existing (fossil fuel based) Class 1 estimates have been adjusted and these adjustments have been estimated by extra calculations. The last section provides an initial set of calculations on 'Class 2' level, to prove the applicability of the total set of design principles to maximize battery electric aircraft range.

Therefore, Class 1 methods have been used for the parametric studies in this disclosure, e.g. for all calculations regarding the relationship between EOM/MTOM and BM/MTOM, EOM and BM/MTOM, and energy efficiency (in Wh/paxkm) and BM/MTOM.

In the following calculations and examples, a refined 'Class 2' analysis is used to calculate the weights, weight fractions, aerodynamic performance (L/D) and resulting range and energy efficiency of aircraft structures and systems that are comparable to fossil fuel aircraft and some simple estimates for other systems, based on established handbook methods and assumptions regarding new technologies (e.g. power-to-weight ratios for electric motors, weight estimates for heat pumps, etc.). See Aerodynamic Design of Transport Aircraft, E. Obert, 2009; Aircraft Design: a conceptual approach, 6th edition, Daniel Raymer, 2018; and Synthesis of Subsonic Aircraft Design, Egbert Torenbeek, 1982, Delft University Press, for further details of these handbook methods.

## *A DESCRIPTION OF THE 'PRIOR ART'*

According to recent consulting reports such as Investigating the Commercial Potential of Battery Electric Aviation and Mapping Autonomous Urban Air Mobility's Progress, Roland Berger Inc., 2017 and 2019, there are 100+ new startups working on electric aircraft. The vast majority is in the eVTOL space: electric vertical take-off and landing vehicles for intra-urban transport of 4-9 passengers. There are also several General Aviation initiatives aiming on recreational flying and flight training (e.g. Bye Aerospace). There is only one EASA certified electric aircraft currently on the market: the Pipistrel Velis Electro 2-seat trainer. Known initiatives of battery-electric aircraft for passenger travel in the CS-23 design space are:

- Eviation Alice: a fully battery powered, 9 pax aircraft with estimated 400 km range (including reserves). Assumptions on battery energy density unknown. BM/MTOM mass claimed to be over 40%.
- Vaeridion: a fully battery powered, 9 pax aircraft with estimated 550 km range (including reserves). Assumptions on battery energy density unknown.

Known initiatives of battery-electric aircraft for passenger travel in the CS-25 design space include:

- Heart Aerospace ES-30: 30 seat battery powered aircraft with turbine range extender to meet reserve requirements. Battery range estimated at 200 km. Batteries are located in the fuselage. BM/MTOM <25% and MTOM 20.000 - 21.000 kg. Battery energy density is unknown.
- Maeve Echelon 1: 40+ seat battery powered aircraft. Battery range estimated at 500 km, assumed to include reserves. Batteries are located in the fuselage. MTOM 45.000 kg and PLM $\pm$ 5000 kg. BM unknown. Assumptions regarding battery energy density unknown.

There also have been several initiatives to electrify existing aircraft designs; that is, to retrofit an existing airframe with a new, battery-powered propulsion system. However, these initiatives where halted when the physical limitations of this approach became apparent. A simple illustration, based on the ATR 72 turboprop, reveals these limitations:

- The ATR 72 can carry $\pm$ 70 pax (7400 kg) and maximum 5000 kg fuel. The empty weight is 13600 kg and MTOM 23000 kg. Note that when carrying the max passenger weight, the aircraft cannot carry the maximum fuel, since this would violate the MTOM.
- The ATR 72 has a LID of $\pm$ 16
- If installing battery packs of 30% of MTOM (6900 kg), the aircraft would be able to carry 25 passengers (2500 kg) to stay within the MTOM limit of 23000 kg. This assumes a similar weight of electric engines and power mgt system and thermal mgt system as current turboprop engines.
- Assuming a energy density of 400 Wh/kg (comparatively high by current standards) for the batteries, the total range would be 540 km including reserves. This would imply a practical range of $\pm$ 200 km, which would not be commercially feasible. The energy efficiency would be at least $\pm$ 210 Wh/pax km.

*PARAMETRIC FEASIBILITY STUDY, BASED ON APPLIED DESIGN PRINCIPLES*

Several parametric designs are now provided, by way of example only. The designs are of aircraft including fuselage and wing arranged in a tube-and-wing design; a plurality of propulsors; and a primary energy source configured to power the propulsors, the primary energy source comprising rechargeable batteries. The aircraft have a maximum take-off mass 'MTOM' of at least 8,618 kg; and an electric range factor 'ERF' of at least 6. The aircraft may or may not include any of the features described under any or all of the design principles described above or two or more of the principles in any combination.

Three aircraft "sizes" are evaluated for a range of ERF values: 40 passengers, 80 passengers, and 120 passengers. The aircraft are designed for a runway length of approximately 2000 m, a cruise altitude of 7000 m, and a cruise speed of Mach 0.6. A wing loading of MTOM/S = 517 kg/m2 is selected to meet the performance requirements, and the number and size of the propellers is adapted to maintain a constant disk loading among the various configurations. A wing aspect ratio of 12 is selected. For reserves, a 150 km diversion is assumed, together with 30 mins loiter capabilities and an additional 5% contingency reserve. These reserves are covered by a fuel-based range extender.

Since the battery energy density is largely determined by external factors unrelated to the aircraft design, for this comparison, a useful, end-of-life pack-level battery energy density of 292 Wh/kg is assumed. Aircraft range varies linear with battery energy density, and therefore the results can easily be extrapolated to other battery-technology levels.

The range, MTOM, energy consumption, empty operating mass fraction, battery mass fraction, lift-to-drag ratio, wing mass (excluding flaps and other secondary elements) and battery mass/wing mass fraction obtained for the various parametric designs are given in Table 2 and Figures 15-17.

*Table 5. Characteristics of 12 different aircraft designs according to embodiments.*

| ERF | MTOM [t] | Useful Range [km] | $\dfrac{Wh}{pkm}$ | $\dfrac{OEM}{MTOM}$ | $\dfrac{BM}{MTOM}$ | $\dfrac{L}{D}$ | Wing mass (WM) [t] | $\dfrac{BM}{WM}$ |
|---|---|---|---|---|---|---|---|---|
| *40 seater* | | | | | | | | |
| 6 | 24.1 | 357 | 130.3 | 53.0% | 30.4% | 19.9 | 1.3 | 5.8 |
| 8 | 30.2 | 505 | 148.4 | 48.8% | 38.0% | 21.1 | 1.6 | 7.1 |
| 10 | 37.7 | 655 | 169.8 | 45.2% | 44.2% | 22.6 | 2.1 | 8.1 |
| 12 | 55.4 | 818 | 236.8 | 41.2% | 51.6% | 23.3 | 3.3 | 8.8 |
| *80 seater* | | | | | | | | |
| 6 | 40.0 | 354 | 105.6 | 50.6% | 29.4% | 20.5 | 2.5 | 4.8 |
| 8 | 48.1 | 498 | 115.8 | 46.6% | 36.8% | 21.7 | 3.0 | 5.9 |
| 10 | 59.0 | 664 | 128.0 | 43.5% | 43.0% | 23.3 | 3.8 | 6.7 |
| 12 | 78.5 | 814 | 163.1 | 40.0% | 49.8% | 24.1 | 5.2 | 7.5 |
| *120 seater* | | | | | | | | |
| 6 | 58.1 | 351 | 101.1 | 50.7% | 28.7% | 20.9 | 4.1 | 4.1 |
| 8 | 70.4 | 503 | 110.4 | 46.7% | 36.2% | 22.2 | 5.0 | 5.1 |
| 10 | 85.4 | 650 | 122.7 | 43.9% | 42.0% | 23.7 | 6.2 | 5.8 |
| 12 | 113.1 | 812 | 153.3 | 40.7% | 48.7% | 24.6 | 8.6 | 6.4 |

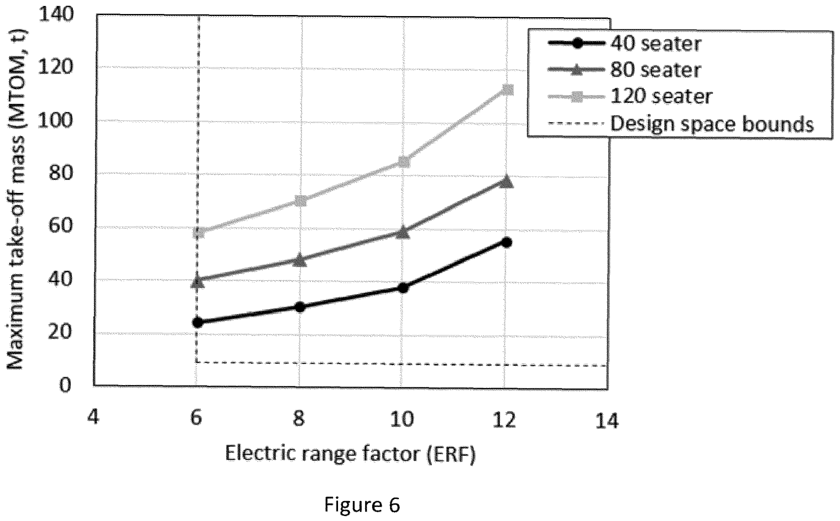

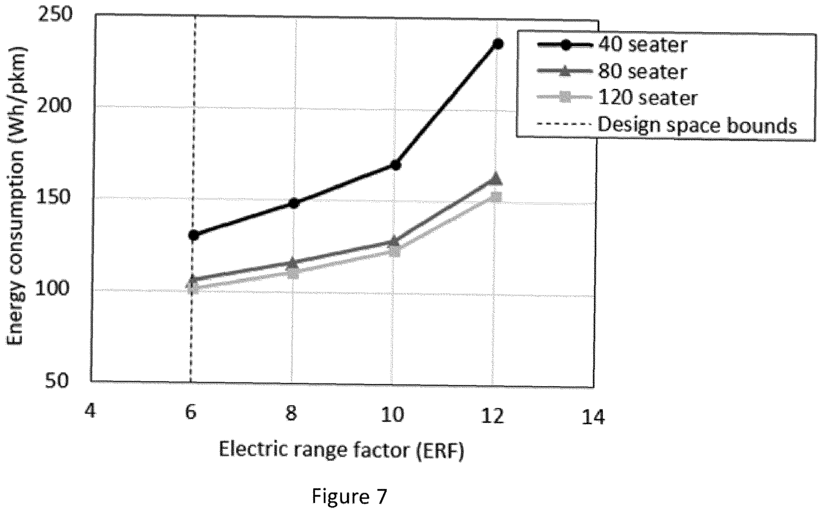

Figure 5 shows how the range of the electric aircraft varies linearly with ERF, independently of the number of passengers, as expected from the Breguet equation. Moreover, Figure 6 shows how the twelve designs fall in the design space of Claim 1 in terms of both ERF and MTOM, with the MTOM increasing with both passenger count and ERF (i.e., range). The MTOM values obtained for these designs range from typical turboprop values (20t - 30t) to narrowbody values (70t - 90t) and beyond (in the present disclosure 1t is 1000 kg). Furthermore, Figure 7 illustrates how the energy consumption per passenger kilometre improves with increasing passenger count ("think big"). The difference between 80 and 120 passengers is much smaller than between 40 and 80, indicating that beyond 80 passengers, a plateau is approached in terms of energy efficiency per pax-km. Moreover, the energy consumption is lower for lower ERF values, since that corresponds to lower battery-mass fractions but higher payload-mass fractions.

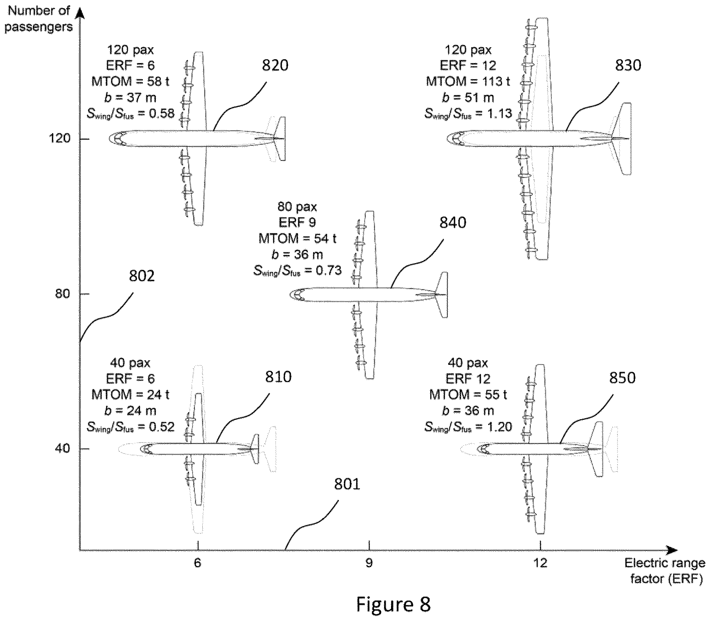

Figure 8 shows a schematic plot setting out a design space for passenger battery electric aircraft according to embodiments. The plot is defined in terms of the electric range factor on the horizontal axis 801 and number of passengers on the vertical axis 802. The planform views of a first aircraft 810, second aircraft 820, third aircraft 830, fourth aircraft 840, and fifth aircraft 850, according to embodiments appear across the design space. Design parameters for each of the first to fifth aircraft are provided in Table 6.

*Table 6. Characteristics of 5 different aircraft designs according to embodiments.*

| ERF | MTOM [t] | $S_{\text{wing}}$ /$S_{\text{fus}}$ | Wing span (m) | $\dfrac{L}{D}$ | Wing mass (WM) [t] | $\dfrac{BM}{WM}$ | No. of propulsors |
|---|---|---|---|---|---|---|---|
| *40 seater* | | | | | | | |
| 6 | 24.1 | 0.52 | 24 | 19.9 | 1.3 | 5.8 | 4 |
| 12 | 55.4 | 1.20 | 36 | 23.3 | 3.3 | 8.8 | 8 |
| *80 seater* | | | | | | | |
| 9 | 54 | 0.73 | 36 | 22.2 | 3.5 | 6.4 | 8 |
| *120 seater* | | | | | | | |
| 6 | 58.1 | 0.58 | 37 | 20.9 | 4.1 | 4.1 | 8 |
| 12 | 113.1 | 1.13 | 51 | 24.6 | 8.6 | 6.4 | 12 |

The drawings show schematically how fuselage size increases only with payload (in this case number of passengers), while wing size increases with both payload and ERF (i.e., range). The contour of the middle configuration (80 passengers, ERF = 9) is indicated in gray transposed onto the other four configurations for comparison.

In Figure 8, where the comparison is performed at constant aspect ratio and wing loading, the wing span b is directly proportional to $\sqrt{\text{MTOM}}$. On the other hand, the size of the wing *relative* to the size of the fuselage, quantified using the area ratio $S_{\text{wing}}/S_{\text{fus}}$, increases mainly with ERF, with higher values of $S_{\text{wing}}/S_{\text{fus}}$ resulting in a higher lift-to-drag ratio. The ratio $S_{\text{wing}}/S_{\text{fus}}$ is defined as $(2S)/(\pi f_{\text{fus}}D_{\text{fus}})$, where the nominator is an approximation of the wing wetted area, while the denominator is an approximation of the fuselage wetted area. A higher value corresponds to a lower zero-lift-drag coefficient. This LID increase partially contributes to the value of ERF, while the main reason for the change in ERF is the difference in battery-mass fraction. The figure also shows how different electric aircraft with comparable take-off masses (MTOM = 54 t ~ 58 t) can cover different missions: many passengers for a short range (120 pax, ERF = 6), moderate amount of passengers for a moderate range (80 pax, ERF = 9), or a small amount of passengers for a relatively long range (40 pax, ERF = 12). Furthermore, Figure 8 and Table 6 shows how different numbers of propulsors are beneficial for different sizes of aircraft. The number of propulsors depicted in Figure 8 is provided merely by way of example.

In summary, these design examples show that the design principles described in this disclosure are applicable to a wide range of payload, range, and other top-level aircraft requirements, while ensuring a technically feasible and energy-efficient aircraft.

As described herein and exemplified by the embodiments and examples, the proposed design principles primarily affect BM/MTOM and 'as a free gift' also increase L/D. Therefore, the parameter of merit for the proposed claim is the product of these two dimensionless parameters: $\left(\frac{L}{D}\right)\left(\frac{BM}{MTOM}\right)$, referred to as the 'electric range factor' (ERF).

Assuming a 90% power train efficiency and an 85% propulsive efficiency, the Breguet range equation for battery electric aircraft can be rewritten as:

$$R = 0{,}078 e_{\text{bat}} ERF$$

Note: R is in kilometers and $e_{\text{bat}}$ is in kJ/kg. Figure 9 shows iso-range curves in a two-dimensional ERF vs $e_{\text{bat}}$ space. Figure 9 plots Breguet cruise range and it may be understood that the example aircraft ranges are calculated based on more precise adaptions to the Breguet equation.

Figure 9 gives a clear indication of what ranges are feasible in the design space (ERF is greater than 6), depending on battery energy density and ERF. It is already known that, all other things being equal, the higher the energy density of the battery, the higher the range of an electric aircraft. However, a contribution of the present disclosure is to recognise that by designing the aircraft to increase the ERF, the range can be significantly increased. The higher the ERF, the lower the battery energy density needed to achieve a certain range. By employing the design principles, design features, or any of the embodiments described herein, the range and therefore viability of electric aircraft for commercial flights can improve significantly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense.

Also described herein are the following numbered embodiments:

Embodiment 1. An aircraft comprising:

a fuselage and at least one wing arranged in a tube-and-wing design;
a plurality of propulsors; and
a primary energy source configured to power the propulsors, the primary energy source comprising rechargeable batteries,

wherein the aircraft has:

a maximum take-off mass 'MTOM' of at least 8,618 kg; and
an electric range factor 'ERF' of at least 6.

Embodiment 2. The aircraft of embodiment 1 having an ERF of at least 6.5.

Embodiment 3. The aircraft of embodiment 1 or 2 having an ERF of at least 7.

Embodiment 4. The aircraft of any preceding embodiment having an ERF of at least 7.5.

Embodiment 5. The aircraft of any preceding embodiment having an ERF of at least 8.

Embodiment 6. The aircraft of any preceding embodiment having an ERF of at least 8.5.

Embodiment 7. The aircraft of any preceding embodiment having an ERF of at least 9.

Embodiment 8. The aircraft of any preceding embodiment having an MTOM of at least 20,000 kg.

Embodiment 9. The aircraft of any preceding embodiment having an MTOM of at least 40,000 kg.

Embodiment 10. The aircraft of any preceding embodiment having an MTOM of at least 60,000 kg.

Embodiment 11. The aircraft of any preceding embodiment having an MTOM of at least 80,000 kg.

Embodiment 12. The aircraft of any preceding embodiment having an MTOM of at least 100,000 kg.

Embodiment 13. The aircraft of any preceding embodiment having a maximum payload mass 'PLM' of at least 3,000 kg.

Embodiment 14. The aircraft of any preceding embodiment having a maximum payload mass 'PLM' at least 6,000 kg.

Embodiment 15. The aircraft of any preceding embodiment having a maximum payload mass 'PLM' of at least 9,000 kg.

Embodiment 16. The aircraft of any preceding embodiment having a maximum payload mass 'PLM' of at least 12,000 kg.

Embodiment 17. The aircraft of any preceding embodiment having a maximum payload mass 'PLM' of at least 15,000 kg.

Embodiment 18. The aircraft of any preceding embodiment having a maximum payload mass 'PLM' of at least 5% of the MTOM.

Embodiment 19. The aircraft of any preceding embodiment having a maximum payload mass 'PLM' of at least 10% of the MTOM.

Embodiment 20. The aircraft of any preceding embodiment having a maximum payload mass 'PLM' of at least 15% of the MTOM.

Embodiment 21. The aircraft of any preceding embodiment having a maximum payload mass 'PLM' of at least 20% of the MTOM.

Embodiment 22. The aircraft of any preceding embodiment having a maximum payload mass 'PLM' of at least 25% of the MTOM.

Embodiment 23. The aircraft of any preceding embodiment, having at least 50% of the total mass of the rechargeable batteries associated with the at least one wing.

Embodiment 24. The aircraft of any preceding embodiment, having at least 60% of the total mass of the rechargeable batteries associated with the at least one wing.

Embodiment 25. The aircraft of any preceding embodiment, having at least 70% of the total mass of the rechargeable batteries associated with the at least one wing.

Embodiment 26. The aircraft of any preceding embodiment, having at least at least 80% of the total mass of the rechargeable batteries associated with the at least one wing.

Embodiment 27. The aircraft of any preceding embodiment, having at least 90% of the total mass of the rechargeable batteries associated with the at least one wing.

Embodiment 28. The aircraft of any preceding embodiment, having at least 95% of the total mass of the rechargeable batteries associated with the at least one wing.

Embodiment 29. The aircraft of any preceding embodiment having a lift-to-drag 'L/D' ratio of at least 15.

Embodiment 30. The aircraft of any preceding embodiment having a lift-to-drag 'L/D' ratio of at least 17.

Embodiment 31. The aircraft of any preceding embodiment having a lift-to-drag 'L/D' ratio of at least 19.

Embodiment 32. The aircraft of any preceding embodiment having a lift-to-drag 'L/D' ratio of at least 21.

Embodiment 33. The aircraft of any preceding embodiment, further comprising a secondary energy source configured to power the propulsors, wherein the secondary energy source has a greater energy density than the primary energy source, and
optionally wherein the secondary energy source comprises a liquid fuel, a non-fossil liquid fuel, a non-rechargeable battery, a metal-air battery, or an aluminium-air battery.

Embodiment 34. The aircraft of any preceding embodiment having a wing volume to fuselage volume ratio 'WV/FV' of at least 0.24.

Embodiment 35. The aircraft of any preceding embodiment having a wing volume to fuselage volume ratio 'WV/FV' of at least 0.27

Embodiment 36. The aircraft of any preceding embodiment having a wing volume to fuselage volume ratio 'WV/FV' of at least 0.30

Embodiment 37. The aircraft of any preceding embodiment having a wing volume to fuselage volume ratio 'WV/FV' of at least 0.33

Embodiment 38. The aircraft of any preceding embodiment having a wing area to fuselage area ratio of at least 0.5.

Embodiment 39. The aircraft of any preceding embodiment having a wing area to fuselage area ratio of at least 0.7.

Embodiment 40. The aircraft of any preceding embodiment having a wing area to fuselage area ratio of at least 0.9.

Embodiment 41. The aircraft of any preceding embodiment having a wing area to fuselage area ratio of at least 1.1.

Embodiment 42. The aircraft of any preceding embodiment having a wing area to fuselage area ratio of at least 1.3.

Embodiment 43. The aircraft of any preceding embodiment, wherein:

the at least one wing is attached to the underside of the fuselage, and/or
the at least one wing comprises foldable tips.

Embodiment 44. The aircraft of any preceding embodiment having a power-to-weight ratio of no more than 0.2 kW/kg.

Embodiment 45. The aircraft of any preceding embodiment having a power-to-weight ratio of no more than 0.18 kW/kg.

Embodiment 46. The aircraft of any preceding embodiment having a power-to-weight ratio of no more than 0.16 kW/kg.

Embodiment 47. The aircraft of any preceding embodiment having a power-to-weight ratio of no more than 0.14 kW/kg.

Embodiment 48. The aircraft of any preceding embodiment having a secondary energy source configured to power the propulsors, the secondary energy source comprising a non-rechargeable battery having an energy density greater than that of the primary energy source.

Embodiment 49. The aircraft of embodiment 48, wherein the secondary energy source comprises one of:

a metal-air battery, or
an aluminium-air battery.

Embodiment 50. A wing assembly for a tube-and-wing design aircraft, the wing assembly comprising:

a wing structure; and
a primary energy source configured to power a plurality of propulsors, the primary energy source comprising rechargeable batteries,

wherein the wing structure has a mass of at least 600 kg, and the ratio of the mass of the rechargeable batteries to the mass of the wing structure is at least 4.

Embodiment 51. The wing assembly of embodiment 50, wherein the wing structure has a mass of at least 1000 kg.

Embodiment 52. The wing assembly of embodiment 50 or 51, wherein the wing structure has a mass of at least 2000 kg.

Embodiment 53. The wing assembly of any of embodiments 50-52, wherein the wing structure has a mass of at least 3000 kg.

Embodiment 54. The wing assembly of any of embodiments 50-53, wherein the wing structure has a mass of at least 4000 kg.

Embodiment 55. The wing assembly of any of embodiments 50-54, wherein the ratio of the mass of the rechargeable batteries to the mass of the wing structure is at least 4.5.

Embodiment 56. The wing assembly of any of embodiments 50-54, wherein the ratio of the mass of the rechargeable batteries to the mass of the wing structure is at least 5.

Embodiment 57. The wing assembly of any of embodiments 50-54, wherein the ratio of the mass of the rechargeable batteries to the mass of the wing structure is at least 5.5.

Embodiment 58. The wing assembly of any of embodiments 50-54, wherein the ratio of the mass of the rechargeable batteries to the mass of the wing structure is at least 6.

Embodiment 59. The wing assembly of any of embodiments 50-58, wherein:

the wing structure is configured to be attached to the underside of a fuselage, and/or
the wing structure comprises a foldable tip.

Embodiment 60, The wing assembly of any of embodiments 50-59 wherein the wing structure comprises a load-bearing hatch, wherein the rechargeable batteries are disposed in the wing structure, the load-bearing hatch is arranged to open and close an opening in the wing structure, and the opening is arranged to allow access to the rechargeable batteries.

Embodiment 61. The wing assembly of embodiment 60, wherein the load-bearing hatch is configured to bear at least a portion of a load applied to the wing structure, and/or transmit aerodynamic, inertial or gravitational loads exerted on the wing structure.

Embodiment 62. The wing assembly of embodiment 60 or 61, wherein at least part of the rechargeable batteries is coupled to the load-bearing hatch.

Embodiment 63. The wing assembly of any of embodiments 50-62, for a tube-and-wing design aircraft having: a maximum take-off mass 'MTOM' of at least 8,618 kg; and an electric range factor 'ERF' of at least 6.

Embodiment 64. The aircraft of any of embodiments 1-49, comprising the wing assembly of any of embodiments 50-62.

Embodiment 65. The aircraft of any of embodiments 1-49 or 64 or the wing assembly of any of embodiments 50-62, wherein:
the plurality of propulsors includes 6 propulsors.

Embodiment 66. The aircraft of any of embodiments 1-49 or 64 or the wing assembly of any of embodiments 50-62, wherein:
the plurality of propulsors includes 8 propulsors.

Embodiment 67. The aircraft of any of embodiments 1-49 or 64 or the wing assembly of any of embodiments 50-62, wherein:
the plurality of propulsors includes 10 propulsors.

Embodiment 68. The aircraft of any of embodiments 1-49 or 64 or the wing assembly of any of embodiments 50-62, wherein:

the plurality of propulsors includes 12 propulsors.

Embodiment 69. The aircraft of any of embodiments 1-49 or 64 or the wing assembly of any of embodiments 50-62, wherein:

the rechargeable batteries are configured to be recharged *in-situ.*

Also described herein are the following numbered items:

Item 1. An aircraft comprising:

a fuselage and at least one wing arranged in a tube-and-wing design;
a plurality of propulsors; and
a primary energy source configured to power the propulsors, the primary energy source comprising rechargeable batteries,
a secondary energy source configured to power the propulsors, the secondary energy source comprising a non-rechargeable battery having an energy density greater than that of the primary energy source.

Item 2. The aircraft of item 1, wherein the secondary energy source comprises one of:

a metal-air battery, or
an aluminium-air battery.

Item 3. The aircraft of item 1, 2 or 3, wherein the secondary energy source is configured to operate exclusively as a reserve energy source, optionally for diversion to an alternative airport and meeting the required loiter and contingency reserves.

Item 4. The aircraft of any of items 1-4, wherein the secondary energy source has an effective energy density greater than 400 Wh/kg.

Item 5. The aircraft of any of items 1-4, wherein the secondary energy source has an effective energy density greater than 500 Wh/kg.

Item 6. The aircraft of any of items 1-4, wherein the secondary energy source has an effective energy density greater than 600 Wh/kg.

Item 7. The aircraft of any of items 1-4, wherein the secondary energy source has an effective energy density greater than 700 Wh/kg.

Item 8. The aircraft of any of items 1-4, wherein the secondary energy source has an effective energy density greater than 750 Wh/kg.

Item 9. The aircraft of any preceding item, wherein the aircraft has:

a maximum take-off mass 'MTOM' of at least 8,618 kg; and
an electric range factor 'ERF' of at least 6.

Item 10. The aircraft of item 9 having an ERF of at least 6.5; at least 7; at least 7.5; at least 8; at least 8.5; or at least 9.

Item 11. The aircraft of item 9 or 10 having an MTOM of at least 20,000, at least 40,000 at least 60,000 at least 80,000, or at least 100,000 kg.

Item 12. The aircraft of any of items 9-11 having a lift-to-drag 'L/D' ratio of at least 15, at least 17, at least 19, or at least 21.

Item 13. The aircraft of any of items 9-12 having a wing volume to fuselage volume ratio 'WV/FV' of at least 0.24, at least 0.27, at least 0.30, or at least 0.33; or having a wing area to fuselage area ratio of at least 0.5, at least 0.7, at least 0.9, at least 1.1, or at least 1.3.

Item 14. The aircraft of any of items 9-13, further comprising a secondary energy source configured to power the propulsors, wherein the secondary energy source has a greater energy density than the primary energy source, and optionally wherein the secondary energy source comprises a liquid fuel, a non-fossil liquid fuel, a non-rechargeable battery, a metal-air battery, or an aluminium-air battery.

Item 15. The aircraft of any preceding item, wherein:
the rechargeable batteries are configured to be recharged *in-situ.*

Also described herein are the following numbered clauses:

Clause 1. A wing assembly comprising:

a wing structure comprising a load-bearing hatch, and
rechargeable batteries,
wherein the rechargeable batteries are disposed in the wing structure,
the load-bearing hatch is arranged to open and close an opening in the wing structure, and
the opening is arranged to allow access to the rechargeable batteries.

Clause 2. The wing assembly of clause 1, wherein the load-bearing hatch is configured to bear at least a portion of a load applied to the wing structure, and/or transmit aerodynamic, inertial or gravitational loads exerted on the wing structure.

Clause 3. The wing assembly of clause 1 or 2, wherein at least part of the rechargeable batteries is coupled to the load-bearing hatch.

Clause 4. The wing assembly of any preceding clause, wherein the wing structure has a mass of at least 600 kg, and the ratio of the mass of the rechargeable batteries to the mass of the wing structure is at least 4.

Clause 5. The wing assembly of any preceding clause, wherein the wing structure has a mass of at least 1,000; at least 2,000; at least 3,000; or at least 4,000 kg.

Clause 6. The wing assembly of any preceding clause, where the ratio of the mass of the rechargeable batteries to the mass of the wing structure is at least 4.5, at least 5, at least 5.5, at least 6, or at least 6.5.

Clause 7. The wing assembly of any preceding clause, wherein:

the wing structure is configured to be attached to the underside of a fuselage, and/or
the wing structure comprises a foldable tip.

Clause 8. The wing assembly of any preceding clause for a tube-and-wing design aircraft having:

a maximum take-off mass 'MTOM' of at least 8,618 kg; and
an electric range factor 'ERF' of at least 6.

Clause 9. An aircraft comprising the wing assembly of any of clauses 1-8 and further comprising:

a plurality of propulsors; and
a primary energy source configured to power the propulsors, the primary energy source comprising the rechargeable batteries,

wherein the aircraft has:

a maximum take-off mass 'MTOM' of at least 8,618 kg; and
an electric range factor 'ERF' of at least 6.

Clause 10. The aircraft of clause 9 having an ERF of at least 6.5; at least 7; at least 7.5; at least 8; at least 8.5; or at least 9.

Clause 11. The aircraft of clause 9 or 10 having an MTOM of at least 20,000, at least 40,000 at least 60,000 at least 80,000, or at least 100,000 kg.

Clause 12. The aircraft of any of clauses 9-11 having a lift-to-drag 'L/D' ratio of at least 15, at least 17, at least 19, or at least 21.

Clause 13. The aircraft of any of clauses 9-12 having a wing volume to fuselage volume ratio 'WV/FV' of at least 0.24, at least 0.27, at least 0.30, or at least 0.33; or having a wing area to fuselage area ratio of at least 0.5, at least 0.7, at least 0.9, at least 1.1, or at least 1.3.

Clause 14. The aircraft of any of clauses 9-13, further comprising a secondary energy source configured to power the propulsors, wherein the secondary energy source has a greater energy density than the primary energy source, and
optionally wherein the secondary energy source comprises a liquid fuel, a non-fossil liquid fuel, a non-rechargeable battery, a metal-air battery, or an aluminium-air battery.

Clause 15. The aircraft of any of clauses 9-14 or the wing assembly of any of clauses 1-8, wherein:
the rechargeable batteries are configured to be recharged *in-situ.*

**Claims**

1. An aircraft comprising:

   a fuselage and at least one wing arranged in a tube-and-wing design;
   a plurality of propulsors; and
   a primary energy source configured to power the propulsors, the primary energy source comprising rechargeable batteries,
   a secondary energy source configured to power the propulsors, the secondary energy source comprising a non-rechargeable battery having an energy density greater than that of the primary energy source.

2. The aircraft of claim 1, wherein the secondary energy source comprises one of:

   a metal-air battery, or
   an aluminium-air battery.

3. The aircraft of claim 1 or 2, wherein the secondary energy source is configured to operate exclusively as a reserve energy source, optionally for diversion to an alternative airport and meeting the required loiter and contingency reserves.

4. The aircraft of claim 1, 2 or 3, wherein the secondary energy source has an effective energy density greater than 400 Wh/kg; greater than 500 Wh/kg; greater than 600 Wh/kg; greater than 700 Wh/kg; or greater than 750 Wh/kg.

5. The aircraft of any preceding claim, wherein the aircraft has:

   a maximum take-off mass 'MTOM' of at least 8,618 kg; and
   an electric range factor 'ERF' of at least 6.

6. The aircraft of claim 5 having an ERF of at least 6.5; at least 7; at least 7.5; at least 8; at least 8.5; or at least 9.

7. The aircraft of claim 5 or 6 having an MTOM of at least 20,000, at least 40,000 at least 60,000 at least 80,000, or at least 100,000 kg.

8. The aircraft of any of claims 5-7 having a lift-to-drag 'L/D' ratio of at least 15, at least 17, at least 19, or at least 21.

9. The aircraft of any of claims 5-8 having a wing volume to fuselage volume ratio 'WV/FV' of at least 0.24, at least 0.27, at least 0.30, or at least 0.33; or having a wing area to fuselage area ratio of at least 0.5, at least 0.7, at least 0.9, at least 1.1, or at least 1.3.

**10.** The aircraft of any preceding claim, wherein:
the rechargeable batteries are configured to be recharged *in-situ.*

Figure 1a

Figure 1b

Figure 1c

Figure 2a

EP 4 442 575 A1

Figure 2b

Figure 3

**Fossil fuel 100 seater turboprop**

Dimensions: fuselage 30m, wingspan 25m
MTOM: 30000 kg
W/S = 500 kg/m2
Aspect ratio ± 12

L/D = ± 15-16

**Battery-electric 100 seater**

Dimensions: fuselage 30m, wingspan 44m
MTOM: 85000 kg
W/S = 500 kg/m2
Aspect ratio ± 12

L/D = ± 22-23

Similar fuselage, similar aspect ratio and similar wing loading give much higher L/D

Figure 4

Figure 5

Figure 6

Figure 7

Figure 8

Figure 9

Europäisches
Patentamt

European
Patent Office

Office européen
des brevets

# EUROPEAN SEARCH REPORT

**Application Number**

EP 23 16 7173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GNADT ALBERT R ET AL: "Technical and environmental assessment of all-electric 180-passenger commercial aircraft", PROGRESS IN AEROSPACE SCIENCES, vol. 105, February 2019 (2019-02), pages 1-30, XP085598724, ISSN: 0376-0421, DOI: 10.1016/J.PAEROSCI.2018.11.002 * sections 1-5 * | 1-10 | INV. B64D27/24 ADD. B64D27/02 |
| Y | US 2016/304214 A1 (HIMMELMANN RICHARD A [US] ET AL) 20 October 2016 (2016-10-20) * paragraphs [0002], [0004] * * paragraphs [0018] - [0024] * * figures * | 1-10 | |
| A | STAACK INGO ET AL: "The potential of full-electric aircraft for civil transportation: from the Breguet range equation to operational aspects", CEAS AERONAUTICAL JOURNAL, SPRINGER VIENNA, VIENNA, vol. 12, no. 4, 21 August 2021 (2021-08-21), pages 803-819, XP037596713, ISSN: 1869-5582, DOI: 10.1007/S13272-021-00530-W [retrieved on 2021-08-21] * the whole document * | 1-10 | **TECHNICAL FIELDS SEARCHED (IPC)** B64D |

-/--

The present search report has been drawn up for all claims

| Place of search | Date of completion of the search | Examiner |
|---|---|---|
| Munich | 5 September 2023 | Weber, Carlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 16 7173

## DOCUMENTS CONSIDERED TO BE RELEVANT

| Category | Citation of document with indication, where appropriate, of relevant passages | Relevant to claim |
|---|---|---|
| A | BARHEIM TRYM ET AL: "Potential and Limitations of Battery-Powered All-Electric Regional Flights-A Norwegian Case Study", IEEE TRANSACTIONS ON TRANSPORTATION ELECTRIFICATION, IEEE, vol. 9, no. 1, 18 August 2022 (2022-08-18), pages 1809-1825, XP011934637, DOI: 10.1109/TTE.2022.3200089 [retrieved on 2022-08-18] * the whole document * | 1-10 |
| A | US 2017/137139 A1 (CONNAULTE MATTHIEU [FR]) 18 May 2017 (2017-05-18) * the whole document * | 1-10 |
| A | VOSKUIJL MARK ET AL: "Analysis and design of hybrid electric regional turboprop aircraft", CEAS AERONAUTICAL JOURNAL, SPRINGER VIENNA, VIENNA, vol. 9, no. 1, 31 October 2017 (2017-10-31), pages 15-25, XP036457001, ISSN: 1869-5582, DOI: 10.1007/S13272-017-0272-1 [retrieved on 2017-10-31] * the whole document * | 1-10 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| Munich | 5 September 2023 | Weber, Carlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7173

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| US 2016304214 | A1 | 20-10-2016 | EP 3085625 A1 | | 26-10-2016 |
| | | | US 2016304214 A1 | | 20-10-2016 |
| US 2017137139 | A1 | 18-05-2017 | EP 3125343 A1 | | 01-02-2017 |
| | | | FR 3039518 A1 | | 03-02-2017 |
| | | | KR 20170015206 A | | 08-02-2017 |
| | | | US 2017137139 A1 | | 18-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANG et al.** Performance analysis of an electrically assisted propulsion system for a short-range civil aircraft. *J Aerospace Engineering,* 2019, vol. 233 (4), 1490-1502
- **HALL et al.** Feasibility of Electrified Propulsion for Ultra-Efficient Commercial Aircraft Final Report. *NASA,* 2019
- **EPSTEIN ; O'FLARITY.** Considerations for Reducing Aviation's CO2 with Aircraft Electric Propulsion. *Journal of Propulsion and Power,* May 2019, vol. 35 (3
- **SCHAFER et al.** Technological, economic, and environmental prospects of all-electric aircraft. *Nature Energy,* 2018, vol. 4, 160-166
- Job. **WEBBER.** Realising Zero-Carbon Emission Flight - Primary Energy Source Comparison and Selection. Aerospace Technology Institute September, 2021
- **H. WERIJ ; M. WAGEMAKER.** The challenge for battery-powered aircraft. Bits & Chips, 2022

- **E. OBERT.** *Aerodynamic Design of Transport Aircraft,* 2009
- **DANIEL RAYMER.** Aircraft Design: a conceptual approach. 2018
- **EGBERT TORENBEEK.** Synthesis of Subsonic Aircraft Design. Delft University Press, 1982
- **E. OBERT.** Aerodynamic Design of Transport Aircraft. IOS Press, 2009
- **EGBERT TORENBEEK.** Advanced Aircraft Design. Whiley Press, 2013
- *NASA/USRA Advanced Design Program Aeronautics Division,* 1988
- Aircraft Design: a conceptual approach. Daniel Raymer, 2018
- **E. OBERT.** Aerodynamic Design of Transport Aircraft. 2009
- Investigating the Commercial Potential of Battery Electric Aviation and Mapping Autonomous Urban Air Mobility's Progress. Roland Berger Inc, 2017